# EUROPEAN PATENT SPECIFICATION

(11) **EP 1 855 938 B1**
(45) Date of publication and mention of the grant of the patent: **15.09.2010**
(21) Application number: 06717373.2
(22) Date of filing: 06.01.2006
(51) Int. Cl.: B63B 25/22, B63B 25/24, B65G 1/04

(54) **AUTOMATED STORAGE AND RETRIEVAL SYSTEM**
SYSTEM ZUR AUTOMATISIERTEN SPEICHERUNG UND ZUM AUTOMATISIERTEN ABRUF
SYSTEME D'ENTREPOSAGE ET DE RECUPERATION AUTOMATISE

(30) Priority: 07.01.2005 US 642062 P
(43) Date of publication of application: 21.11.2007
(73) Proprietor: Siemens Industry, Inc., Alpharetta, GA 30005-4437 (US)
(72) Inventor: MEDLEY, James A., Sparta, Michigan 49345 (US); EVANS, Richard L., Rockford, Michigan 49341 (US); BROUWER, Gerald A., Grandville, Michigan 49418 (US)
(74) Representative: Payne, Janice Julia
(86) International application number: PCT/US2006/000154
(87) International publication number: WO 2006/074208

(56) References cited:
- EP-A- 1 193 195
- WO-A-03/068657
- DE-U1- 20 302 969
- GB-A- 1 254 387
- US-A1- 2002 070 099

## Description

### BACKGROUND OF THE INVENTION

The invention relates to material handling systems for secure stowage of inventoried items where the systems may be located within structures subject to external forces and movement, and in particular to a material handling system capable of automated transporting and storing of inventoried items in a securely retained manner such that the items are not damaged and may be stored and retrieved despite the external forces, and more particular to a system according to the features of the preamble of independent claim 1, and to a method related thereto.

Environments and locations subject to external forces or movement exist in which it is desirable to utilize an automated material handling system due to the benefits of compact, accurate storing and reduced manpower. For example, such locations may include ships, aircraft, and buildings subject to seismic or wind activity, or the like. However, the use of typical automated material handling systems in such environments creates a risk of damage to the inventoried items and/or damage to the automated material handling system due to the lack of secured storage and movement of the inventoried items, as discussed above.

Therefore, what is needed is a secure automated material handling system that is able to operate in environments that are subject to motion or external forces such that the inventoried items being stored are securely held and may also be transported and retrieved even when the system is subject to such motion or external forces.

Closest prior art document WO 03/068657 describes a storage and retrieval system for automated handling of palletised and containerised items, e.g. on a ship. Selection and retrieval is under computer control.

DE 20302969 describes a shelf store integrated in the hold of a ship with storage tracks extending along the ship and at least one transverse conveyer and a vertical lifting platform for loading and discharge

### SUMMARY OF THE INVENTION

The present invention is embodied in an automated material handling system for selectively storing and retrieving inventoried items, where the system is capable of transporting and storing the inventoried items in a securely retained manner such that the items are not damaged and may be stored and retrieved even when the structure to which the system is mounted is subject to external forces or movement.

According to one aspect of the present invention, a material handling system installed within a transportation craft and method for selectively storing and retrieving inventoried loads includes providing a controller, a transportation craft, and an automated storage and retrieval system installed within the craft. The automated storage and retrieval system has at least one rack and a transfer machine, with the at least one rack defining a plurality of storage positions and the transfer machine being adapted to convey loads for insertion or extraction from the storage positions.

According to another aspect of the present invention, a material handling system installed within a transportation craft for selectively storing and retrieving loads includes a transportation craft and at least one rack installed within the transportation craft, a controller, and a transfer machine. The at least one rack defines a plurality of storage positions, each of which includes a storage conveyor. The transfer machine is operable in response to the controller to transport loads for storage at or retrieval from each of the storage positions and the storage conveyors and transfer machine are adapted to cooperatively convey loads for insertion or extraction between the transfer machine and the storage positions in response to the controller.

The material handling system may further include a load retention system on at least one chosen from the storage positions and the transfer machine, the load retention system being adapted to impede motion of the loads other than when the loads are conveyed for storage or retrieval. The storage conveyor may be adapted to simultaneously move all loads contained within a corresponding one of the storage positions in unison. In addition, the storage conveyor may include a storage shuttle with the transfer machine and the storage conveyor adapted to be selectively engaged to operate the storage shuttle to cooperatively insert or extract loads between the transfer machine and the storage conveyor corresponding to the engaged storage conveyor. The storage shuttle may include at least one chain for conveying loads along the storage position.

One of the transfer machine and the storage conveyor may also include a drive transport mechanism with the other of the transfer machine and the storage conveyor including a driven transport mechanism, and with the drive transport mechanism being adapted to selectively engage the driven transport mechanism to operate the storage shuttle. The drive and driven transport mechanisms may each include a friction wheel and the drive transport mechanism may be mounted to an extension device, the extension device being operable in response to the controller to engage the drive transport mechanism with the driven transport mechanism. The transfer machine may also include a storage load sensor that is operable to detect the position of a load within the storage position, with the controller being operable in response to the storage load sensor to disengage the drive transport mechanism from the driven transport mechanism.

The transfer machine may also include a transfer machine load sensor operable to regulate spacing between loads stored within the storage positions. The transfer machine load sensor being adapted to detect the position of loads on the transfer machine and the controller being operable in response to the transfer machine load sensor to selectively control the cooperative conveying of loads between the storage conveyor and the transfer machine. The transfer machine is adapted to regulate spacing between loads by, prior to conveying a first load from the transfer machine to one of the storage positions, the transfer machine and storage conveyor cooperatively convey a second load from the corresponding storage position partially onto the transfer machine in response to the controller. In further response to the transfer machine load sensor, the transfer machine and storage conveyor are adapted to stop cooperatively conveying the second load onto the transfer machine when the first and second loads are spaced a predetermined distance. The transfer machine and storage conveyor are then adapted to simultaneously convey the first and second loads into the storage position in response to the controller to thereby control spacing between loads.

The material handling system may further include a load receiving assembly adapted to enable loads to be received and delivered for delivery to and removal from the transfer machine. The load receiving assembly may include a transfer conveyor having first and second transfer conveyor ends, with the first transfer conveyor end being adapted to enable loads to be placed on or removed from the transfer conveyor and the second transfer conveyor end being adapted to enable loads to be moved between the transfer machine and the transfer conveyor. The transfer conveyor may also include at least one load transfer retention system adapted to constrain movement of loads along the transfer conveyor whereby loads are impeded from moving other than when conveyed for storage or retrieval. The material handling system may also include load platforms adapted to hold inventoried items with the load receiving assembly further comprising a load platform holder adapted to dispense empty load platforms upon which inventoried items are to be stacked for storage and adapted to collect empty load platforms from which inventoried items are removed.

The material handling system may further include an aisle along which the transfer machine is adapted to travel and a transfer machine position sensor, with the controller being operable in response to the transfer machine position sensor to selectively align the transfer machine relative to the storage positions.

The storage positions of the material handling system may include passive storage positions with the transfer machine being operable in response to the controller to be selectively aligned with any one of the storage positions and being operable in further response to the controller to operate the storage conveyor corresponding to the storage position to cooperatively convey loads for insertion or extraction between the transfer machine and the storage position.

According to yet another aspect of the present invention, a material handling system installed within a transportation craft for selectively storing and retrieving loads includes a transportation craft, at least one rack installed within the transportation craft, a transfer machine, and at least one load retention system. The at least one rack defining a plurality of storage positions, each of which includes a storage conveyor and the transfer machine including a load handling conveyor operable to transport loads for storage at or retrieval from each of the storage positions. The storage conveyor and load handling conveyor being adapted to cooperatively insert or extract loads between the transfer machine and the storage position and the at least one load retention system being located on at least one of the transfer machine and storage position. The load retention system comprising at least one of the load handling conveyor and the storage conveyor and being adapted to impede movement of loads other than when the loads are conveyed for storage or retrieval.

Each of the at least one load retention systems may comprise at least one track, with the loads being adapted for constrained movement along the at least one track. The material handling system may also include load platforms adapted to hold inventoried items, with the load platforms being adapted for constrained movement along the at least one load retention system. When load platforms are included, each of the at least one load retention systems may include first and second tracks, with the load platforms being adapted for constrained sliding movement within the first and second tracks.

The at least one load retention system may further include a storage shuttle included at the storage conveyor, the storage shuttle being adapted to convey loads along the storage position and including grip members. The at least one load retention system may also or alternatively further include a load handling shuttle included on the transfer machine, the load handling shuttle being adapted to convey loads into and out of the transfer machine and including grip members. The grip members of the storage shuttle and/or the grip members of the load handling shuttle being adapted to engage loads such that independent movement of loads within the storage position and the transfer machine is impeded. The storage shuttle and/or the load handling shuttle may include at least one chain, with the grip members of the storage shuttle and/or the load handling shuttle comprising serrated chain links.

The storage conveyor of the material handling system may also include a storage shuttle, with the transfer machine and the storage conveyor being adapted to be selectively engaged to operate the storage shuttle and cooperatively insert or extract loads between the transfer machine and the storage conveyor corresponding to the engaged storage conveyor. One of the transfer machine and the storage conveyor may include a drive transport mechanism and the other of the transfer machine and the storage conveyor may include a driven transport mechanism, with the drive transport mechanism being adapted to selectively engage the driven transport mechanism to operate the storage shuttle.

The material handling system may further include a transfer conveyor adapted to enable loads to be received for storage into and delivered for removal from the transfer machine. The transfer conveyor having first and second transfer conveyor ends with the first transfer conveyor end being adapted to enable loads to be placed on or removed from the transfer conveyor and the second transfer conveyor end being adapted to enable loads to be moved between the transfer machine and the transfer conveyor.

The material handling system may also employ load containers adapted to hold inventoried items, with the at least one load retention system being adapted to constrain movement of the load containers whereby the load containers are impeded from moving other than when conveyed for storage or retrieval. When load containers are employed, the at least one load retention system may include at least one restraint member having a restraint surface adapted to constrain movement of the storage containers along at least one of the storage conveyor and the load handling conveyor.

According to still another aspect of the present invention, a material handling system installed within a transportation craft for selectively storing and retrieving inventoried loads includes a transportation craft having at least one aisle, at least one rack installed within the transportation craft and defining a plurality of storage positions, and a transfer machine operable to travel substantially horizontally along the at least one aisle to transport loads for storage at or retrieval from each of the storage positions, with the transfer machine being adapted to generally horizontally convey loads for insertion or extraction from the storage positions.

The material handling system may further include a load retention system on at least one of the storage positions and the transfer machine, the load retention system being adapted to impede motion of loads other than when being conveyed for storage or retrieval. The material handling system may include load platforms and/or load containers, with the load platforms and load containers being adapted to hold inventoried items and the load retention system being adapted to enable constrained movement of the load platforms and/or the load containers.

The storage positions of the material handling system may include a storage conveyor having a storage shuttle, with the transfer machine and storage conveyor adapted to being selectively engaged to operate the storage shuttle and cooperatively insert or extract loads between the transfer machine and the correspondingly engaged storage conveyor. One of the transfer machine and the storage conveyor may include a drive transport mechanism and the other of the transfer machine and the storage conveyor may include a driven transport mechanism, with the drive transport mechanism being adapted to selectively engage the driven transport mechanism to operate the storage shuttle. Each storage shuttle may include at least one chain adapted to move the loads within the storage position.

The automated material handling system of the present invention includes many advantages. By way of example, it enables loads to be efficiently and automatically stored while securely holding the items during transportation and storage, even when the structure to which the system is mounted is subject to external forces or movement. The transfer conveyor that may be used to convey inventoried items for storage into the racks or retrieval from the racks, the transfer machine that may be used to deliver the inventoried items between the transfer conveyor and storage positions of the racks, and the storage positions of the racks may all include load retention systems that allow loads to be transported within the material handling system in a constrained manner such that the loads are impeded from moving other than when being transported by the system. The load retention systems may include tracks within which pallets or load platforms may slide while remaining confined within the tracks. The load retention systems may also include shuttles having grip members that engage the loads to impede independent motion of the loads relative to the shuttle. In addition, the storage positions and transfer machine may be constructed to cooperatively exchange loads when the transfer machine engages and actuates the storage conveyor of a storage position, with the shuttles of the storage positions being constructed to resist motion when not engaged by the transfer machine.

These and other objects, advantages, and features of this invention will become apparent upon review of the following specification in conjunction with the drawings.

### BRIEF DESCRIPTION OF THE DRAWINGS

FIG. 1 is a transverse sectional view of a ship having an automated material handling system constructed in accordance with the present invention installed on a lower deck of the ship;
FIG. 2 is a perspective view of an automated material handling system in accordance with the present invention shown with a layer of storage positions of one of the racks removed for clarity;
FIG. 3 is a perspective view of a transfer machine and rack portion of FIG. 2 shown with the transfer machine aligned with a row having two storage positions;
FIG. 4 is a front perspective view of a storage position of FIG. 2;
FIG. 5 is a front perspective view of a storage position of FIG. 2 shown from the opposite side relative to FIG. 4;
FIG. 6 is a top plan view of a storage position of a rack of FIG. 2;
FIG. 7 is a side elevation view of the storage position of FIG. 6;
FIG. 8 is a front end view of the storage position of FIG. 6;
FIG. 9 is a partial sectional view of the storage tracks of the storage position of FIG. 7 taken along the line A-A;
FIG. 10 is a top perspective view of a load platform used with an illustrated embodiment of the automated material handling system of the present invention;
FIG. 11 is a perspective view of the load platform of FIG. 10 shown with a pallet clamped thereto;
FIG. 12 is a bottom perspective view of the load platform and pallet of FIG. 11;
FIG. 13 is a partial perspective view of a load conveying chain;
FIG. 14 is a perspective view of a transfer machine shown removed from the automated material handling system of FIG. 2;
FIG. 15 is a perspective view of the load handling device removed from the transfer machine of FIG. 14;
FIG. 16 is a partial perspective view of the clamping mechanism of the load handling device of FIG. 15;
FIG. 17 is another partial perspective view of the load handling device of FIG. 15;
FIG. 18 is a perspective view of the rack drive mechanism located on the load handling device of FIG. 15;
FIG. 19 is a perspective view of a load receiving assembly shown removed from the automated material handling system of FIG. 2;
FIG. 20 is a partial perspective view of the first conveyor end and shuttle mechanism of the load receiving assembly of FIG. 19;
FIG. 21 is a perspective view of a load platform driver used to clamp pallets to load platforms;
FIG. 22 is a schematic block diagram of the control system of the automated material handling system of the present invention;
FIG. 23 is a front elevation view of an alternatively embodied transfer machine for handling alternatively configured loads; and
FIG. 24 is a front elevation view of an alternatively configured storage position of a rack used to store the alternatively configured loads handled by the transfer machine illustrated in FIG. 23.

### DESCRIPTION OF THE PREFERRED EMBODIMENT

The present invention will now be described with reference to the accompanying figures, wherein the numbered elements in the following written description correspond to like-numbered elements in the figures.

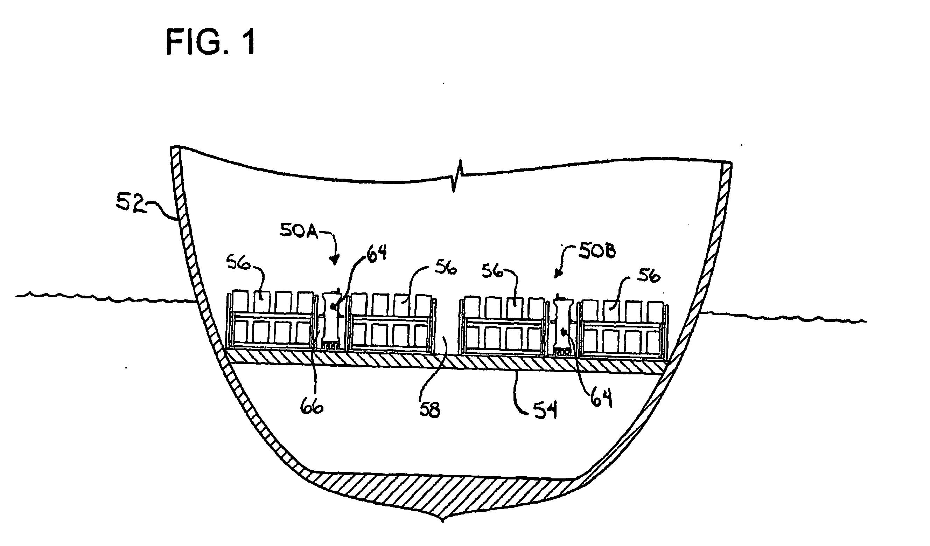

A transportation craft having an automated material handling system is illustrated in FIG. 1, the transportation craft being illustrated as a ship 52 with two material handling systems or automated storage and retrieval systems 50A, 50B that may be of generally similar construction affixed to deck 54. Each automated material handling system 50A, 50B is used to accurately and expeditiously automatically sort, store, and retrieve inventoried loads 56 within ship 52, thereby achieving a high load storage to cargo area density within ship 52 with the loads 56 being readily accessible. Beneficially, as described in more detail below, systems 50A and 50B may include various retention systems that enable loads 56 to be conveyed for storage or extraction in a constrained manner such that unwanted movement of the loads 56 within systems 50A and 50B is generally prohibited despite external forces being applied to ship 52 via heavy sea states.

In the illustrated embodiment, systems 50A and 50B are separated by aisle 58 (FIG. 1) that enables loads 56 to be delivered to or taken away from either system 50A or 50B by a fork lift (not shown), or the like. Systems 50A and 50B are illustrated as being of generally bisymmetrical or mirror construction, therefore, the following description is directed toward system 50A with the understanding of the commonality of system 50B.

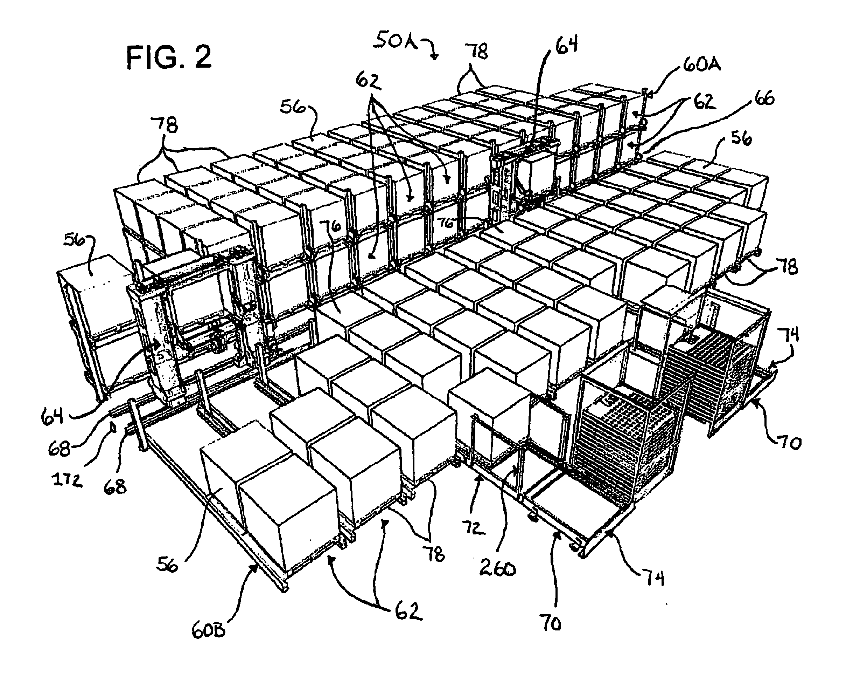

FIG. 2 illustrates that system 50A includes racks 60A, 60B having multiple storage positions 62 into which loads 56 are stored and retrieved by one or more transfer machines 64 that move between racks 60A and 60B along aisle 66 on rails 68. The loads 56 are introduced into and retrieved out of system 50A by way of one or more load receiving assemblies 70 that include transfer conveyors 72 that transport the loads 56 between a first conveyor end 74 and a second conveyor end 76 terminating at aisle 66. As described below, load retention systems are included on the transfer conveyor 72, transfer machines 64, and storage positions 62 of system 50A that securely hold and constrain the movement of loads 56 such that unwanted movement of loads within system 50A is impeded. In addition, the storage positions of system 50A may be constructed to cooperatively operate with transfer machines 64 to insert or extract loads 56 between the transfer machines 64 and storage positions 62, as well as convey the loads 56 along the length of the storage positions 62.

As shown in FIG. 2, racks 60A and 60B include multiple bays or rows 78 of storage positions 62 with each storage position 62 constructed to receive four loads 56 for storage. Each row 78 of rack 60A is illustrated to have two stacked storage positions 62 while rows 78 of rack 60B are illustrated with only one storage position 62. Alternatively, however, the rows within the racks may be constructed to include one or more stacked storage positions, or the storage positions may receive more or less than four loads, or only one rack or racks with curved profiles may be employed with the material handling system still functioning as intended within the scope of the present invention.

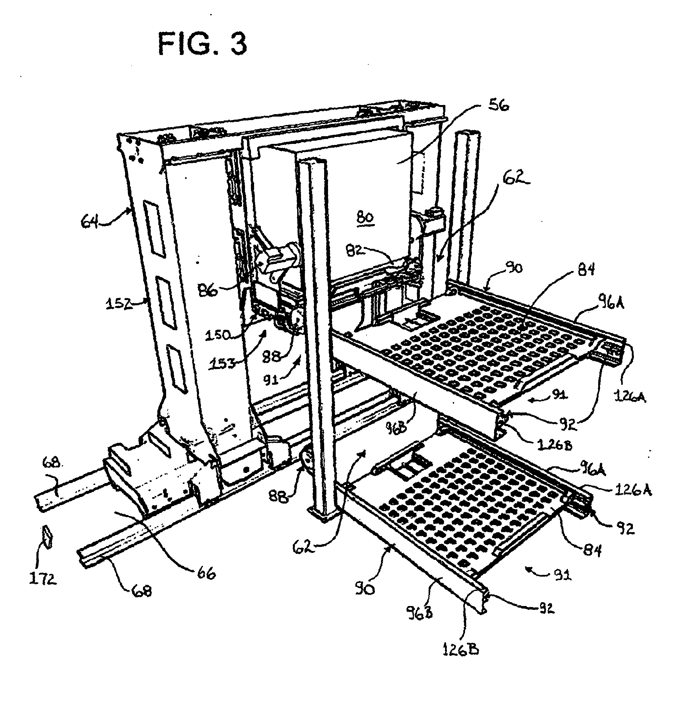

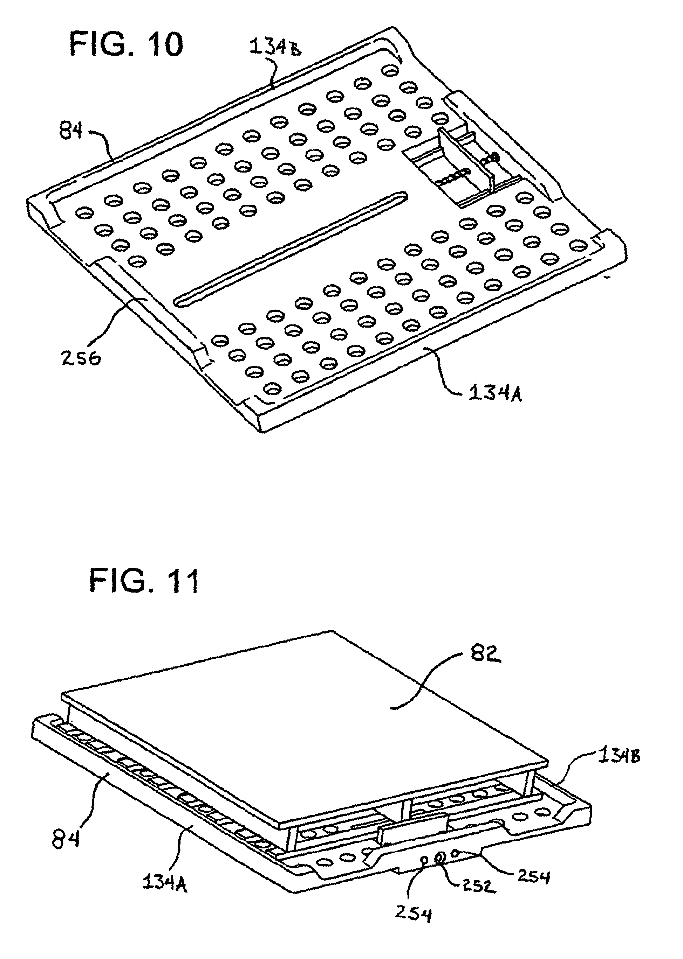

Referring now to FIG. 3, a transfer machine 64 is shown positioned in alignment with two storage positions 62 such that the load 56 contained on the transfer machine 64 may be inserted into the storage position 62. In the illustrated embodiment of FIGS. 2 and 3, as understood in conjunction with FIGS. 10-12 and described in detail below, loads 56 consist of inventoried items 80 that may include standard pallets 82 that may in turn be affixed to pallets or load platforms 84. For clarity, FIG. 3 illustrates the inventoried items 80 and pallets 82 removed from load platforms 84 in storage positions 62.

Transfer machine 64 is described in more detail below, but includes a load handling transport mechanism or drive mechanism 86 that is adapted to selectively engage a storage transport mechanism or driven mechanism 88 of a storage conveyor 90 located on each storage position 62. As described below, when the driven mechanism 88 of a given storage position 62 is engaged by a drive mechanism 86 of transfer machine 64, all loads 56 within the storage position 62 are caused to move in unison along the storage conveyor 90, either away from or towards transfer machine 64 depending upon the actuation direction of drive mechanism 86.

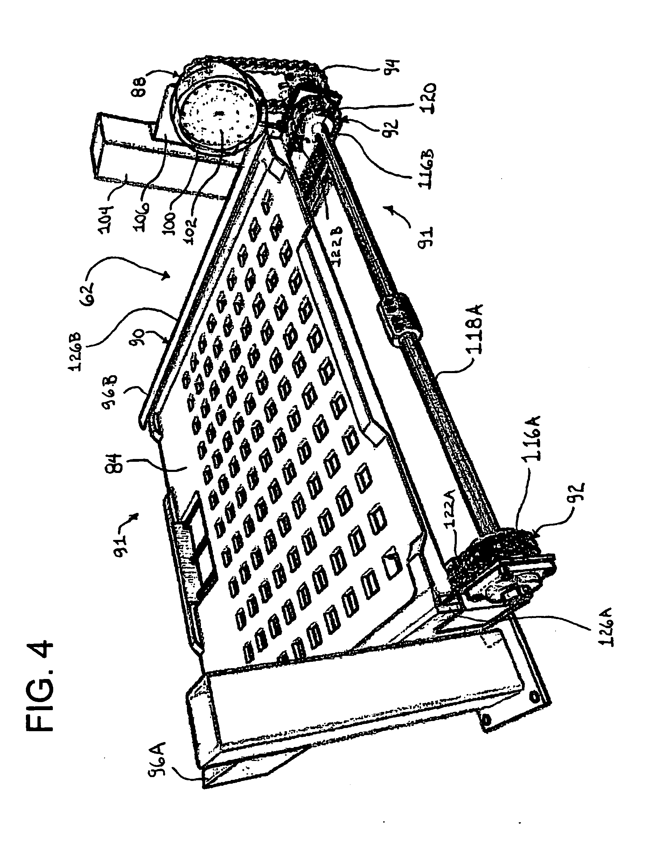

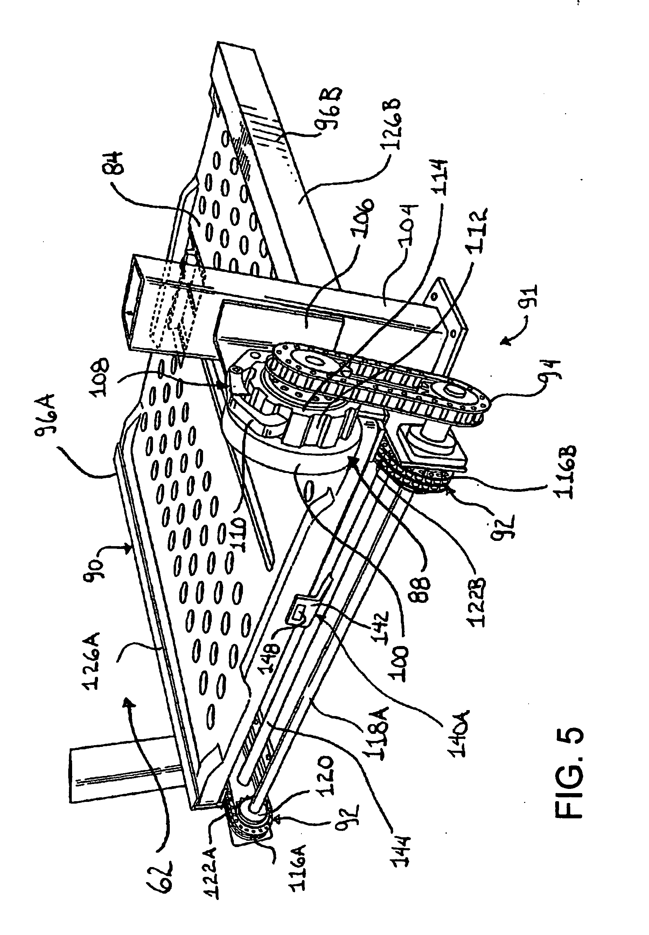

Referring now to FIGS. 4-9, the storage conveyor 90 of each storage position 62 may include a load storage retention system 91 adapted to impede motion of loads 56 within the storage positions 62 other than when the drive mechanism 86 of the transfer machine 64 engages the driven mechanism 88 of the storage position 62. The load storage retention system 91 may include a storage transporter or storage shuttle 92 that travels within storage tracks 96A, 96B, the shuttle 92 being operable to convey loads along the storage position 62 and having grip members, described below, that engage the loads 56 and the storage tracks 96A, 96B functioning to slidingly restrain the loads 56. Load storage retention system 91 may be further defined by driven mechanism 88, which is connected to shuttle 92 by a chain 94 (FIGS. 4 and 5) and includes braking features, also described below, adapted to impede motion of shuttle 92 when shuttle 92 is not being driven by drive mechanism 86.

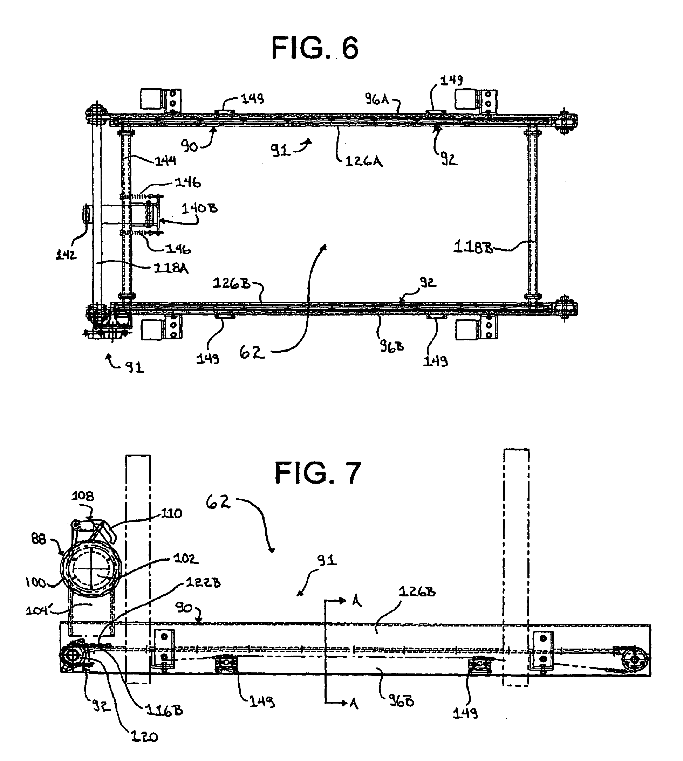

In the embodiment shown, driven mechanism 88 includes a friction driven wheel 100 that is functionally mounted to a cycloidal gearbox 102, which in turn is fixedly secured, such as to a post 104 by a bracket 106 or, as shown in FIG. 7, to a post 104', to storage track 96B. Gearbox 102 is constructed to have a high gear ratio, preferably on the order of 59 to 1, such that gearbox 102 is substantially non-back driveable and thus functions as a locking gearbox. That is, the shuttle 92 of storage conveyor 90 is generally impeded from moving unless friction driven wheel 100 is rotationally engaged by drive mechanism 86, thus loads 56 stored within the storage position 62 are also generally impeded from moving. Friction driven wheel 100 may be constructed as an aluminum wheel to which is bonded a polymeric coating, or alternatively, may be constructed as a polymeric or other type of metallic wheel to which is bonded an alternative coating or no coating. In addition to gearbox 102, a brake mechanism 108 (FIGS. 5 and 7) may also be provided on driven mechanism 88 to further prevent shuttle 92 of storage conveyor 90 from moving independently of actuation by drive mechanism 86. Brake mechanism 108 includes a locking pawl 110 that selectively engages one of the grooves 112 located on an external wheel 114 of gearbox 102, with locking pawl 110 being pivoted away from wheel 114 by drive mechanism 86 when drive mechanism 86 is caused to contact the driven mechanism 88.

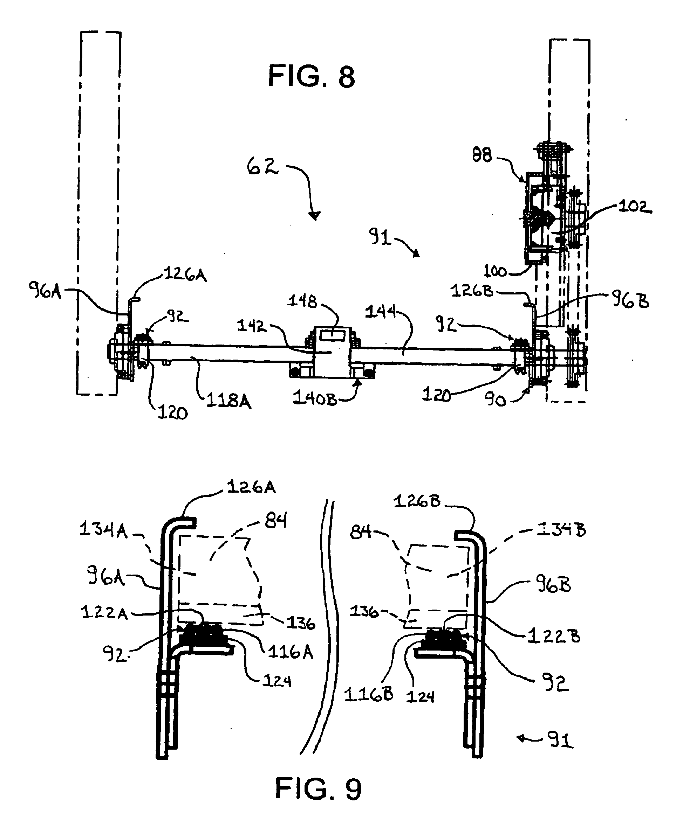

As shown in FIGS. 4-6, shuttle 92 is constructed to include first and second storage chains 116A, 116B that are rotationally secured together and driven by connecting rods 118A and 118B to which sprockets 120 are mounted, where connecting rod 118A is driven by chain 94 connected to gearbox 102. The upper portions of first and second storage chains 116A, 116B, as partially shown in FIGS. 4, 5, and 9, define first and second transport portions 122A, 122B, respectively, that slidingly travel within first and second storage tracks 96A, 96B on top of chain glides 124. In the illustrated embodiment, as shown in FIG. 9, first and second storage tracks 96A, 96B are formed as C-shaped channels 126A, 126B that are constructed to enable load platforms 84 to move along storage positions 62 within the C-shaped channels 126A, 126B on first and second transport portions 122A, 122B as described below.

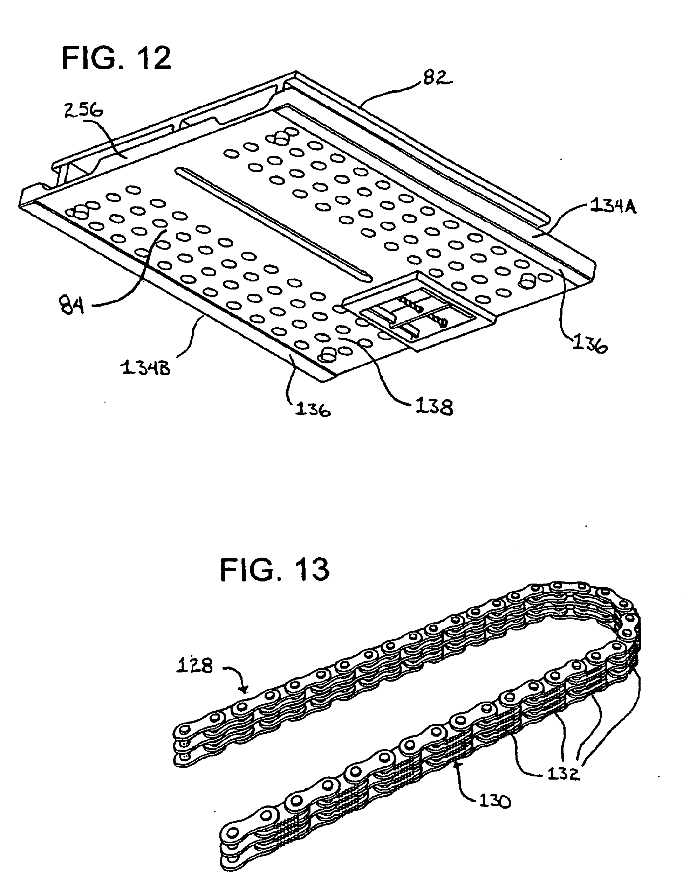

FIG. 13 discloses a representative chain portion 128 used to construct first and second storage chains 116A, 116B of shuttle 92. Chain portion 128 includes grip members 130 that are illustrated as multiple serrated links 132 that are adapted to engage load platforms 84 of loads 56 to form a mechanical engagement with the platform. As shown in FIG. 12, each load platform 84 includes first and second edges 134A, 134B having pliable areas such as wear strips 136 affixed to a bottom surface 138 of load platform 84 adjacent to edges 134A, 134B. In the illustrated embodiment, wear strips 136 are removably replaceable and constructed of polymeric material. The polymeric material of the wear strips 136 may be bonded to a metal back plate (not shown), where the back plate includes through holes such that the wear strips 136 may be secured to mounting holes on the load platforms 84 by fasteners (not shown). The serrated links 132 are adapted to physically engage the wear strips 136 such that the load platforms 84 are restricted from moving independently of first and second storage chains 116A, 116B along the length of storage position 62. That is, the peaks of the serrated links 132 extend into the polymeric material of the wear strips 136 such that the load platform 84 is temporarily and generally fixedly secured to the first and second storage chains 116A, 116B. First and second storage chains 116A, 116B, as with all of the load platform 84 engaging chains discussed herein, can be formed to have varying numbers of serrated links 132, such as every link, every other link, or other spaced patterns of serrated links 132.

As understood from FIGS. 4, 5, and 9, when a load platform 84 is located within a given storage position 62, the first and second edges 134A, 134B of the load platforms 84 are adapted to be slidingly contained within the first and second C-shaped channels 126A, 126B such that the first and second storage chains 116A, 116B are able to transport the load platforms 84 along the storage position. When the load platforms 84 are stored along the storage position 62 in this manner they are constrained from moving in either a vertical or perpendicular orientation relative to the first and second C-shaped channels 126A, 126B.

As noted above, gearbox 102 is generally non-back drivable and includes brake mechanism 108 such that first and second storage chains 116A, 116B are generally prohibited from moving unless friction driven wheel 100 is engaged by a drive mechanism 86 of the transfer machine 64. This feature, along with the load platforms 84 being both constrained by the first and second C-shaped channels 126A, 126B as well as engaged by the serrated links 132 of the first and second storage chains 116A, 116B, combine to contribute to the load storage retention system 91 that securely holds the loads 56 within a storage position 72 of racks 60A, 60B even if system 50A is subject to external forces.

As shown in FIGS. 5, 6, and 8, each storage position 62 may also include a storage stop device 140A or 104B that provides additional retention to loads 56 stored within the storage positions 62. Storage stop devices 140A and 140B are of generally similar construction, but with storage stop device 140A being positioned between connecting rod 118A and load platform 84 and storage stop device 140B being positioned in front of connecting rod 118A. Referring to FIGS. 6 and 8, the storage stop devices 140B include a stop arm 142 that is mounted to a stop rod 144 with the stop arm 142 being upwardly biased by springs 146 to block unwanted movement of loads 56 out of storage positions 62. The stop arms 142 are selectively moved out of position in the manner described below when loads 56 are exchanged between a transfer machine 64 and storage position 62. The storage stop devices 140A, 140B also include a reflective member 148 affixed to the stop arm 142 facing aisle 66 that operates in connection with a sensor on the transfer machine 64, described below, to coordinate the exchange of loads 56. FIGS. 7 and 8 also illustrate the inclusion of chain tensioners 149 on storage tracks 96A, 96B for maintaining and adjusting the tension on chains 116A, 116B.

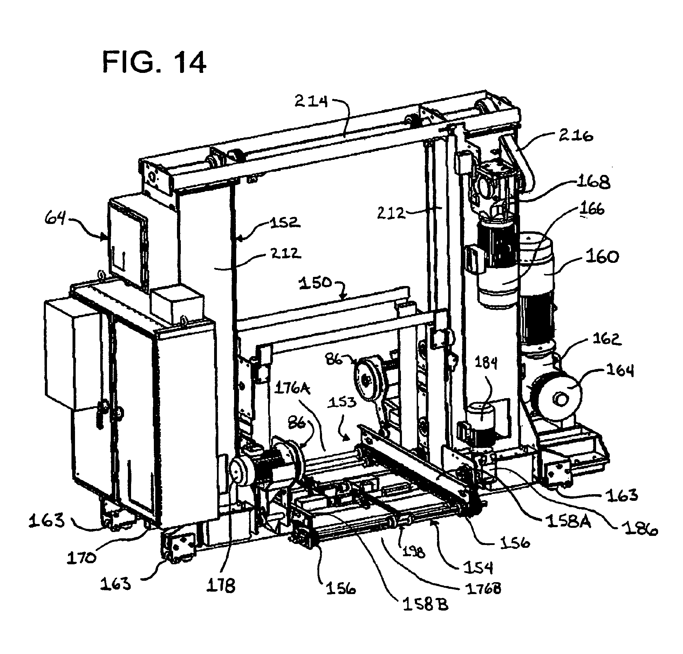

Transfer machine 64, as noted above, is adapted to cooperatively exchange loads 56 with and between the various given storage positions 62. As shown in FIGS. 14-18, transfer machine 64 includes a load handling device 150, and a lift and travel carriage 152 (FIG. 14), where carriage 152 is adapted to enable load handling device 150 to be moved in both horizontal and vertical directions and selectively aligned with the various storage positions 62 of racks 60A and 60B for insertion or extraction of loads 56.

In similar manner to storage positions 62, transfer machine 64 may include a load handling retention system 153 adapted to impede motion of loads 56 within transfer machine 64 other than when transfer machine 64 is operated to transport or convey loads 56 from and to storage positions 62. As described in detail below, load handling retention system 153 may include a load handling conveyor 154 having a load handling shuttle 156 operable to travel within first and second load handling tracks 158A, 158B, with the load handling shuttle 156 including grip members 130.

Referring to FIG. 14, carriage 152 includes travel motor 160 functionally affixed to gearbox 162 that function to transport or move transfer machine 64 in a generally horizontal direction along rails 68 (FIGS. 2 and 3). Carriage 152 includes wheels 163 that engage rails 68 in a manner similar to commercial roller coasters such that transfer machine 64 is able to roll along the axis of rails 68, but is prevented from vertical or perpendicular movement relative thereto and is, therefore, substantially securely affixed to rails 68. Gearbox 162 includes a sprocket drive system 164 that is adapted to engage a floor chain (not shown) having fixed ends, the floor chain being able to thereby provide the required reaction force for movement of transfer machine 64. Carriage 152 also includes lift motor 166 affixed to gearbox 168 for vertically moving load handling device 150.

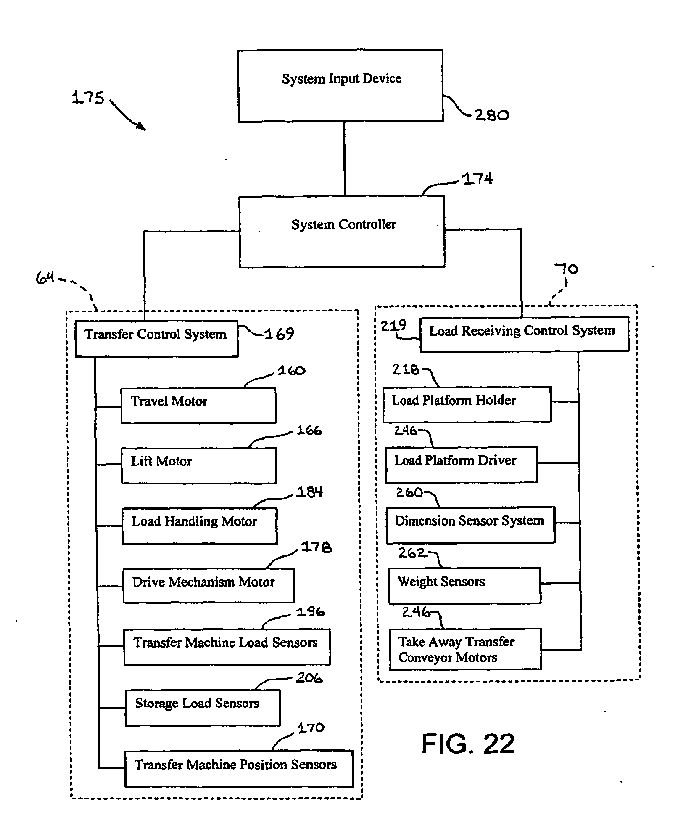

Carriage 152 also includes an electrical transfer control system 169 (FIG. 22) that controls the transfer of loads 56 to and from a storage position 62. Transfer control system 169 is positioned entirely on transfer machine 64. This reduces the number of control devices and generally avoids the necessity of running wiring among racks 60A, 60B. In the illustrated embodiment, transfer control system 169 includes transfer machine position sensor 170, which in the embodiment illustrated is a laser sensor that is adapted to project a laser beam at a reflective member 172 (FIGS. 2 and 3) located along aisle 66. Laser position sensor 170 operatively communicates with a system controller 174 of a material handling control system 175, illustrated in FIG. 22 and described below, whereby transfer machine 64 may be accurately aligned with the various storage positions 62 via control signals sent to travel motor 160 by the system controller 174. Alternatively, one or more transfer machine position sensors may be mounted to deck 54 adjacent aisle 66 with one or more corresponding reflector members located on transfer machines 64.

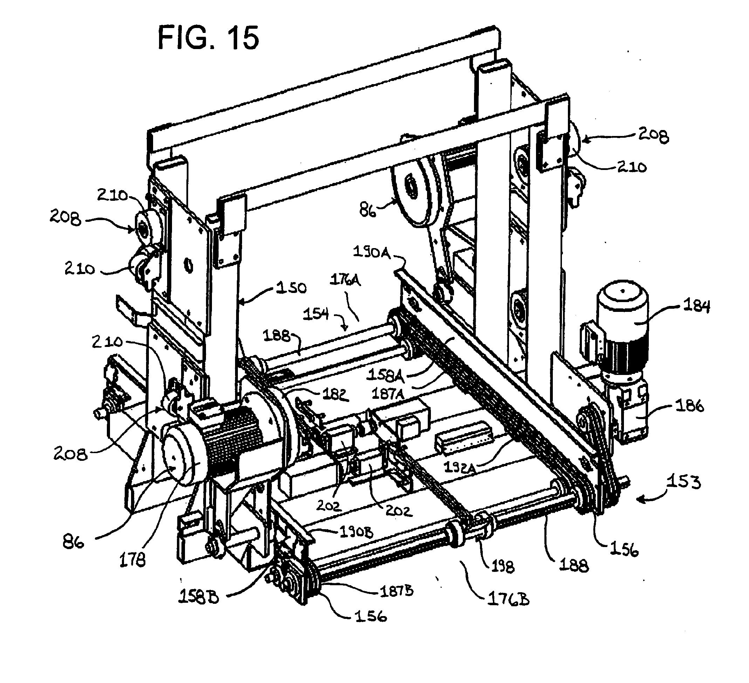

Load handing device 150, shown removed from transfer machine 64 in FIG.15, includes first and second transfer sides 176A, 176B with drive mechanisms 86 on both first and second transfer sides 176A, 176B, thus enabling loads 56 to be conveyed out of or into either of the first or second transfer sides 176A, 176B in the manner described below to store and retrieve loads 56 from racks 60A, 60B located on either side of aisle 66. First and second transfer sides 176A, 176B are substantially mirror images of one another, therefore, the following description will focus on first transfer side 176A with the understanding of the commonality of second transfer side 176B.

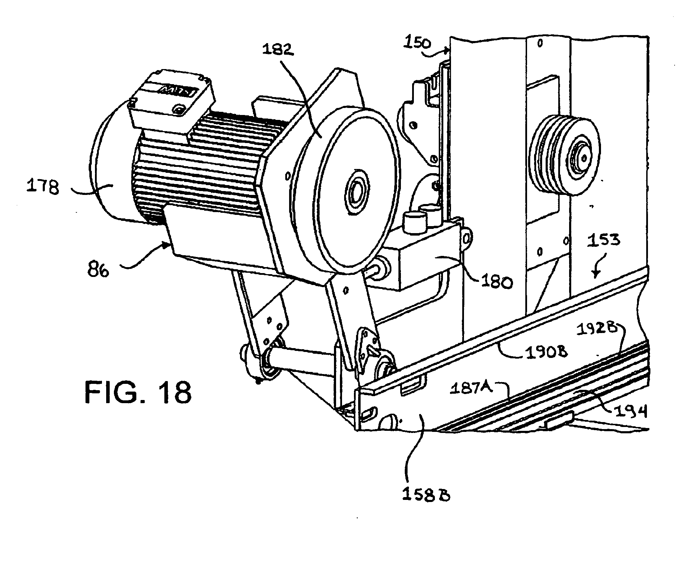

As illustrated in FIG. 18, drive mechanism 86 includes a motor 178 and is functionally affixed to load handling device 150 by extension device 180, with extension device 180 being able to selectively extend and retract drive mechanism 86. In the illustrated embodiment, extension device 180 is a linear actuator, but may alternatively be constructed as a ball screw, or other such device. Drive mechanism 86 includes a friction drive wheel 182 that is rotationally mounted to motor 178 and is adapted to frictionally engage a friction driven wheel 100 of a storage position 62 when extended by extension device 180. Although not shown, extension device 180 may include a load cell to monitor the amount of contact force between the drive and driven mechanisms 86, 88 to ensure that the drive and driven wheels 182, 100 are sufficiently engaged.

Friction drive wheel 182 is preferably constructed of hardened steel. The construction of friction drive and driven wheels 182, 100 provides sufficient frictional force between the two such that drive mechanism 86 is able to cause the storage conveyor 90 of a storage position 62 to simultaneously convey, in the manner described above, all loads 56 located within a storage position 62. Furthermore, drive mechanism 86, in cooperation with additional structure on load handling device 150 described below, is able to cause storage shuttle 92 to insert loads 56 into a storage position 62 from the load handling device 150 or extract loads 56 out of a storage position 62 onto a load handling device 150.

The frictional drive arrangement of friction drive and driven wheels 182, 100 provide a reliable drive system that is able to convey loads 56 along storage position 62 despite potential alignment errors that may occur between the drive mechanism 86 and the driven mechanism 88. However, it should be understood that alternative load handling and storage transport mechanisms 86, 88 may be employed that would also function to convey loads 56 along a storage position 62. For example, each individual storage position 62 could include a motor adapted to cause storage shuttle 92 to convey loads 56 along the storage position 62. Alternatively, toothed gears could be located on both the transfer machine 64 and each storage position 62, or an extendable drive or driven worm gear could be utilized. As such, it should be readily understood that system 50A is not intended to be limited to the friction drive and driven wheels 182, 100 arrangement described above.

In addition to the friction drive wheel 182, load handling device 150 includes a load handling conveyor 154 that is adapted to convey loads 62 out of or onto the load handling device 150. Load handling conveyor 154 is drivable via load handling motor 184 and load handling gearbox 186 to move loads 56 out of or into load handling device 150 through either of first and second transfer sides 176A, 176B.

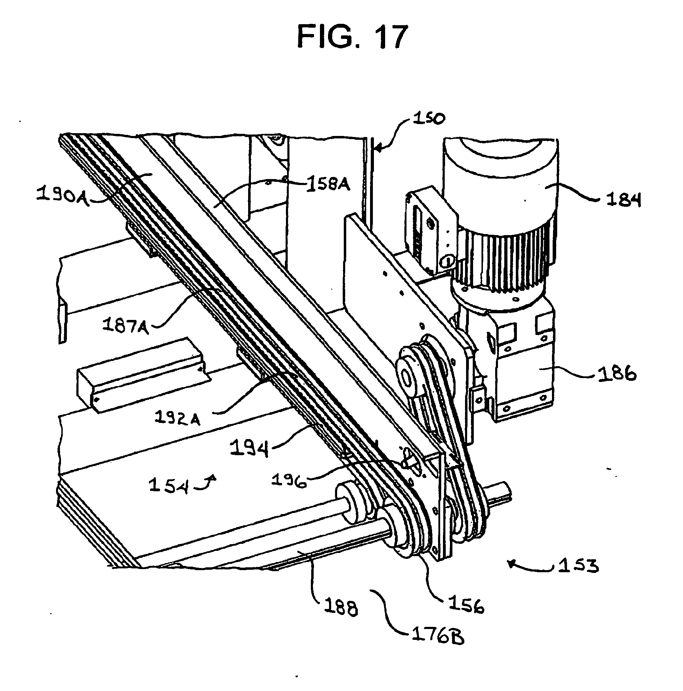

Load handling conveyor 154 includes a load handling shuttle 156, which in the illustrated embodiment is constructed as first and second load handling chains 187A, 187B that are simultaneously moved by load handling motor 184 and load handling gearbox 186 through connecting shafts 188. First and second load handling chains 187A, 187B are of generally similar construction to first and second storage chains 116A, 116B of storage shuttle 92, described above, and include grip members 130 that may be formed as the illustrated serrated chain links 132. In like manner to storage conveyor 90, load handling conveyor 154 includes first and second load handling tracks 158A, 158B that are formed as generally C-shaped first and second channels 190A, 190B, with first and second load handling chains 187A, 187B including first and second transport portions 192A, 192B that slidingly travel within the first and second C-shaped channels 190A, 190B on top of a chain glide 194 (FIGS. 17 and 18).

In like manner to storage conveyors 90, the first and second edges 134A, 134B and wear strips 136 of load platforms 84 are adapted to travel within first and second C-shaped channels 192A, 192B on top of the serrated links 132 of first and second transport portions 192A, 192B. Therefore, loads 56 positioned within transfer machine 64 are both constrained by the first and second C-shaped channels 190A, 190B as well as engaged by the serrated links 132 of the first and second load handling chains 187A, 187B such that the loads 56 are substantially held within the load handling device 150 of the transfer machine 64 even if system 50A is subject to external forces.

Transfer control system 169 also includes, as shown in FIG. 17, a transfer machine load sensor 196 positioned adjacent second transfer side 176B. Transfer machine load sensor 196 is operatively connected to system controller 174 of system 50A and is used to detect the presence and position of a load 56 within load handling tracks 158A, 158B relative to the transfer machine load sensor 196. As described below, transfer machine load sensor 196 may be used to control the spacing between loads 56 stored on a given storage position 62. Transfer machine load sensor 196 may be constructed as a proximity sensor, or the like, and although not shown, a transfer machine load sensor 196 may also be positioned adjacent first transfer side 176A.

As shown in FIGS. 14-16, load handling device 150 may also include load handling stop devices 198 on first and second transfer sides 176A, 176B to provide additional retention to loads 56 located within load handling device 150. Load handling stop devices 198 include a stop plate 200 that may be selectively positioned by a stop extension device 202 between an upright first position and a lowered second position, where stop extension devices 202 may be constructed as rotary motors with cam linkages, linear actuators, ball screws, or other such devices. The load handling stop devices 198 may also include sensors 204 for detecting and communicating with system controller 174 of system 50A the position of stop plates 200.

Load handling stop devices 198 are constructed to align and interact with the storage stop devices 140B of a storage position 62 when transfer machine 64 aligns with the storage position 62 to exchange loads 56. In order to transfer a load 56 between load handling device 150 and a storage position 62, stop plate 200 is lowered by stop extension device 202 such that stop plate 200 contacts and lowers stop arm 142 of storage stop device 140B. When the load 56 is then conveyed past stop plate 200, stop extension device 202 causes stop plate 200 to raise such that stop arm 142 will automatically spring back into a retention position when the bottom surface 138 of the load platform 84 has cleared stop arm 142. Similarly, when a load 56 is conveyed from a storage position 62 into load handling device 150, stop plate 200 is initially caused to lower stop arm 142 such that the load 56 may be conveyed out of the storage position 62.

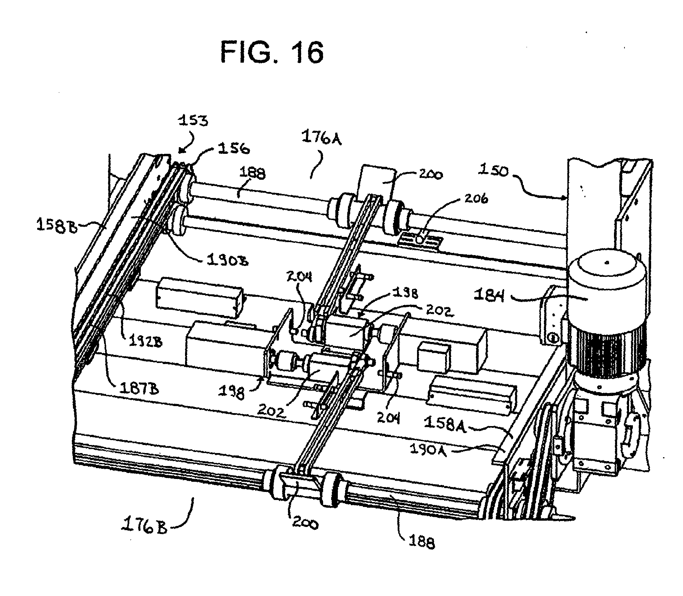

FIG. 16 further illustrates that transfer control system 169 includes a storage load sensor 206 that may be located at first transfer side 176A of load handling device 150 adjacent stop plate 200. Although not shown, a second storage load sensor 206 may be correspondingly located adjacent the stop plate 200 of first transfer side 176A. Storage load sensors 206 may be constructed as light, laser, or other types of photo eyes and operate in conjunction with the reflective members 148 affixed to stop arms 142 of storage stop devices 140B to detect whether the stop arm 142 has been returned to the upwardly biased blocking position shown in FIG. 8. Storage load sensors 206 are able to communicate to the system controller 174 of system 50A when a load 56 that is being inserted into or extracted from a storage position 62 has cleared the stop arm 142 due to the stop arm 142 springing back into position such that the reflective member 148 is detected by the storage load sensor 206.

Load handling device 150, as shown in FIG. 15, may also include multiple wheel assemblies 208 having sets of opposed running wheels 210. The opposed running wheels 210 are adapted to roll on vertical rails 212 of lift carriage 152, as shown in FIG. 14. Wheel assemblies 208 enable load handling device 150 to move in a vertical direction while preventing movement of load handling device 150 relative to transfer machine 64 in a plane perpendicular to vertical rails 212. Lift motor 166 and lift gearbox 168 are adapted to impart vertical movement to load handling device 150 through drive shaft 214 and lift chains 216.

The imparting of motion to load handling chains 187A, 187B of load handling device 150 by load handling motor 184 such that load platforms 84 may be slidingly moved within first and second C-shaped channels 190A, 190B of load handling device 150, along with simultaneous movement of storage shuttle 92 by drive and driven mechanisms 86, 88, enables loads 56 to be cooperatively exchanged for insertion or extraction between transfer machine 64 and a given storage position 62. Furthermore, motor 178 of drive mechanism 86 can be independently activated relative to load handling motor 184, thereby enabling independent movement of storage shuttle 92 and load handling shuttle 156 such that the spacing between loads 56 within a storage position 62 can be controlled in the manner described below.

For example, when inserting a load 56 into a storage position 62 that already contains one or more loads 56, stop plate 200 is used to initially lower the stop arm 142 of storage stop device 140B. Friction drive wheel 182 may then be caused to engage friction driven wheel 100 to initially withdraw the first load 56 of the storage position 62 partially onto the load handling device 150 of the transfer machine 64. When the transfer machine load sensor 196 detects the presence of the load 56 that has been partially withdrawn from the storage position 62, friction drive wheel 182 may then be caused to rotate in the opposite direction concurrently with the activation of load handling motor 184 to cause both the load handling shuttle 156 and storage load shuttle 92 to move in unison and direct the loads 56 into the storage position 62. When the transfer machine load sensor 196 then detects that the original load 56 to be stored in the storage position 62 is no longer on the load handling conveyor 154, the load handling motor 184 may stop motion of the load handling shuttle 156 while the drive wheel 182 continues to rotate the driven wheel 100 to operate storage shuttle 92. Then, when the storage load sensor 206 detects that the stop arm 142 of the storage stop device 140B has returned to the biased, upright position the rotation of motor 178 may be stopped and extension device 180 may retract drive mechanism 88 from driven mechanism 88 of the storage position 62. In this manner, gaps in the range of one inch between loads 56 stored within storage positions 62 may be obtained.

Similarly, when removing a load 56 from a storage position 62, stop plate 200 is used to initially lower the stop arm 142 of storage stop device 140B. Next, friction drive wheel 182 may be engaged with friction driven wheel 100 to cause storage shuttle 92 to simultaneously move all loads 56 within the storage position 62 toward the load handling device 150. When the first load 56 of the storage position 62 has been partially withdrawn, based on timing by the controller 174 or based on detection by transfer machine load sensor 196, load handling motor 184 may be activated to enable the load handling shuttle 156 to further assist in cooperatively conveying the first load 56 onto the transfer machine 64. Because loads 56 on the storage position move in unison, the load 56 following the first load 56 may also be partially withdrawn from the storage position 62 and toward the load handling device 150. Therefore, when the transfer machine load sensor 196 detects either that the first load 56 is fully on the load handling device 150 or detects the presence of the second load 56, movement of the load handling shuttle 156 may be discontinued concurrently with reverse actuation of drive mechanism 86 to re-insert the remaining loads 56 back into the storage position 62. When the storage load sensor 206 then detects that the stop arm 142 of the storage stop device 140B has returned to the biased, upright position the rotation of motor 178 may be stopped and extension device 180 may retract drive mechanism 86 from the driven mechanism 88 of the storage position 62.

Referring now to FIGS. 2, 19, and 20, and as noted above, load receiving assemblies 70 include transfer conveyors 72 and may also include a load transfer retention system 217 adapted to impede motion of loads on transfer conveyor 72 other than when transfer conveyor 72 is operated to introduce and retrieve loads 56 into and out of system 50A. Load transfer retention system 217, in similar manner to load handling retention system 153, may include various transfer shuttles and transfer racks, as described below. Load receiving assemblies 70 may also include a load platform holder 218 for receiving empty load platforms 84 when not in use and dispensing load platforms 84 to be loaded with items 80 for storage into system 50A. Load receiving assembly 70 also includes a load receiving control system 219, as illustrated in FIG. 22, that controls the transfer of loads 56 to and from first conveyor end 74 and second conveyor end 76, including the dispensing and receiving of load platforms 84 by load platform holder 218.

Load platform holder 218 includes a load platform elevator 220 consisting of four cables or chains 222 having tabs 224 adapted to engage the corners of load platforms 84 contained within load platform holder 218. Chains 222 are indexed, such as by a stepper motor 226, up or down depending upon whether a load platform 84 is being received or dispensed. A shuttle 228 is located at the base of load platform holder 218 for transporting empty load platforms 84 between the load platform holder 218 and the first conveyor end 74 of transfer conveyor 76. Shuttle 228 includes two shuttle arms 230 for moving the load platforms 84, with the shuttle arms 230 being mounted to a lift system 232 for lifting empty load platforms 84 over or depositing empty load platforms 84 on the first transfer shuttle 234 of first conveyor end 74. When an empty load platform 84 located at first conveyor end 74 is to be inserted into load platform holder 218, shuttle arms 230 are initially caused to extend underneath the load platform 84, lift system 232 then raises the shuttle arms 230 into engagement with the load platform 84 such that the load platform 84 is lifted off of first transfer shuttle 234. The shuttle arms 230 are then drawn into load platform holder 218 with the load platform 84 passing beneath load guide 236 and above first transfer shuttle 234.

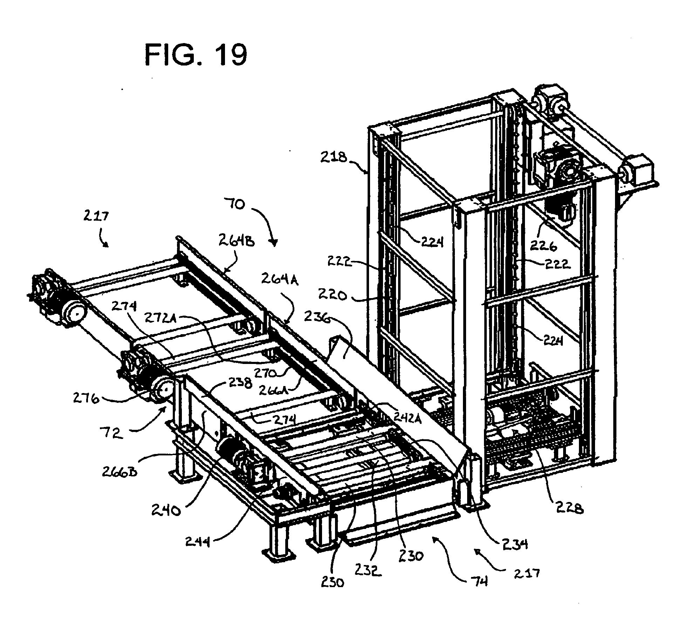

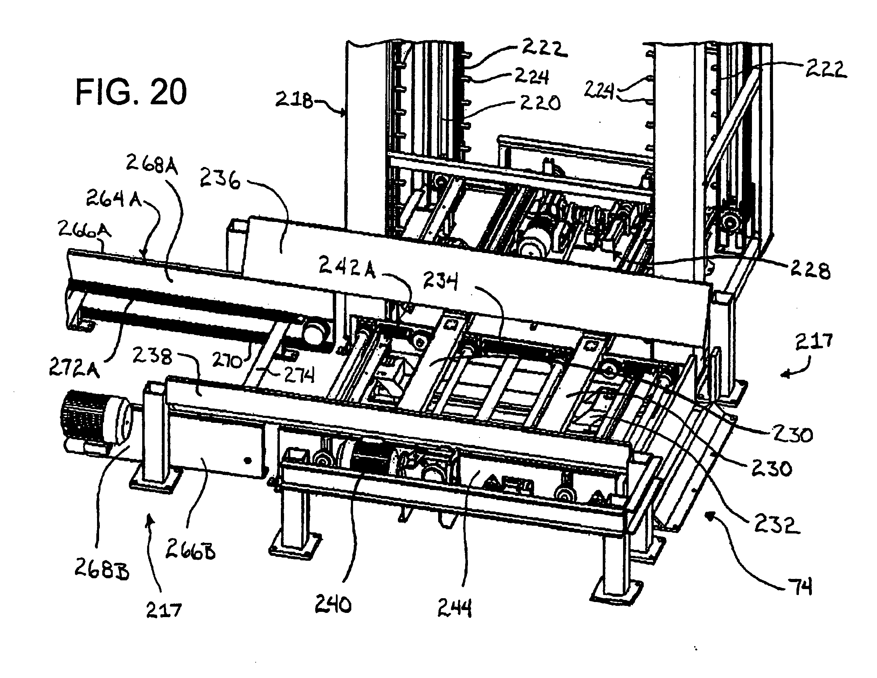

First conveyor end 74 of transfer conveyor 72, as shown in FIGS. 19 and 20, is adapted to enable inventoried items 80 stacked on pallets 82 to be loaded onto or unloaded from load platforms 84. First conveyor end 74 may include a pair of load guides 236, 238 to direct the placement of inventoried items 80 on pallets 82 onto a load platform 84 at first conveyor end 74, such as by a forklift. First conveyor end 74 also includes a drive motor 240 that is adapted to rotate the first transfer shuttle 234. In the illustrated embodiment, first transfer shuttle 234 is constructed as first and second transfer conveyor chains 242, with only first transfer conveyor chain 242A being shown in FIGS. 19 and 20. First and second transfer conveyor chains 242 are of substantially similar construction to storage and load handling chains 116, 187 described above, including grip members 130 that may be formed as the illustrated serrated chain links 132. A transfer retention track 244 may be located beneath load guide 238, with transfer retention track 244 being of substantially similar construction to storage tracks 96 and load handling tracks 158 described above such that one edge 134 of a load platform 84 positioned at first conveyor end 74 may be constrained by transfer retention track 144.

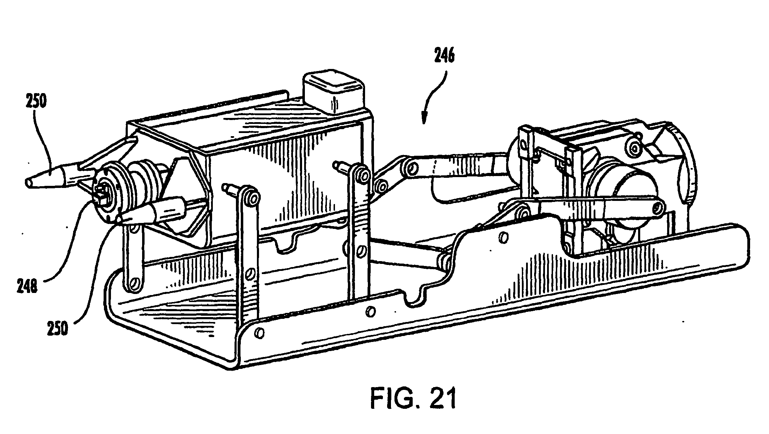

Although not shown in FIGS. 19 and 20, first conveyor end 74 may include a load platform driver 246 as shown in FIG. 21 positioned between first conveyor end 74 and the first take away transfer conveyor 264A (described below), with the load platform driver 246 operable via system controller 174 to clamp inventoried items 80 to a load platform 84. Load platform driver 246 includes a removable driver bit 248 and locating pins 250. As understood with reference to FIG. 11, driver bit 248 is adapted to engage a socket 252 on load platforms 84 when locating pins 250 are received within locating holes 254. Rotation of driver bit 248 causes clamp 256 on load platform 84 to clamp pallet 82 onto load platform 84 between clamp 256 and back edge 258. Load platform driver 246 may include a torque monitoring sensor (not shown) and communicates with system controller 174 of system 50A to verify that pallets 84 are properly secured to load platforms 84. Inventoried items 80 may be, in turn, secured to pallets 84 by straps, shrink wrap, clamps, or the like.

As shown in FIG. 2, first conveyor end 74 may include a dimension sensor system 260, such as optical sensors, as part of the load receiving control system 219. Dimension sensor system 260 electronically communicates with system controller 174 and functions to determine whether or not a load 56 is properly sized to fit within a storage position 62. First conveyor end 74 may also include weight sensors 262, such as load cells, (FIG. 22) that weigh the loads 56 prior to storage within racks 60A, 60B. The system controller 174 of system 50A may compare the signal from the weight sensors 262 relative to predetermined limits to determine whether or not a load 56 is overweight for the racks 60A, 60B.

Transfer conveyor 72 may further include a series of take away transfer conveyors 264, with first and second take away transfer conveyors 264A, 264B shown adjacent first conveyor end 74 in FIG. 19. First and second take away transfer conveyors 264A, 264B are of substantially similar construction such that the following description is directed at first take away transfer conveyor 264A. First take away transfer conveyor 264A includes first and second transfer tracks 266A, 266B that are of substantially similar construction to the storage tracks 96 and load handling tracks 158 described above and, in the illustrated embodiment, are constructed as first and second generally C-shaped channels 268A, 268B, within which first and second edges 134A, 134B, of load platforms 84 are adapted to slidably move in like manner to that illustrated in FIG. 9. First take away transfer conveyor 264A also includes a transfer conveyor shuttle 270, which in the illustrated embodiment is constructed as first and second take away chains 272, with only first take away chain 272A being illustrated, connected by shafts 274. As with first conveyor end 74, first and second take away chains 272 of first take away conveyor 264A include grip members 130 formed as serrated chain links 132. First take away transfer conveyor 264A also includes a drive motor 276 adapted to provide motion to transfer conveyor shuttle 270. The transfer tracks 266A, 266B and transfer conveyor shuttle 270 thus also define portions of the load transfer retention system 217.

A series of take away transfer conveyors 264 may be used to convey loads 56 between first and second conveyor ends 74, 76. Each of the take away transfer conveyors 264 may thus be equipped with one or more transfer conveyor load position sensors (not shown) for determining the presence and relative position of a load 56 on the take away transfer conveyor 264 such that the system controller 174 is able to selectively activate the various transfer conveyor shuttles 270 to transport the loads 56. Alternatively, however, a longer, single take away transfer conveyor may be employed to convey loads between first conveyor end 74 and aisle 66, or a take away transfer conveyor constructed to include a driven mechanism that may be engaged by drive mechanism 86 of transfer machine 64 similar to the driven mechanisms 88 of storage positions 62 may be employed.

In operation, transfer conveyor 72 is able to directly convey loads 56 along the length of transfer conveyor 72 directly between first and second conveyor ends 74, 76 when there are no additional loads 56 on the transfer conveyor 72. Alternatively, as understood form FIG. 2, loads 56 on transfer conveyor 72 may be advanced towards aisle 66 for storage or toward first conveyor end 74 for removal in a step-by-step fashion such that multiple loads 56 may be simultaneously located on and moved by transfer conveyor 72.

As noted above, material handling control system 175 of system 50A may include a system controller 174 that is adapted to monitor and coordinate the proper storage into and extraction of loads 56 from system 50A. FIG. 22 schematically illustrates that material handling control systems 175 includes a system controller 174 that interacts with transfer control system 169 of transfer machine 64 and with load receiving control system 219 of load receiving assembly 70. The various storage positions 62, as noted above, do not include sensors or motors such that the storage positions 62 function as passive storage positions 62, thereby minimizing the components, control and power wiring, and overall complexity of system 50A. Although not shown in FIGS. 1-3 and 14, a caterpillar type power and communications link 278 is used between system controller 174 and transfer machines 64, where the link 278 is continually laid down on deck 54 by transfer machine 64 when traversing along aisle 66 in one direction and wound up by transfer machine 64 when traversing in the opposite direction.

Material handling control system 175 includes system input device 280 that is adapted to supply communication information to system controller 174 regarding loads 56 that are to be removed from or stored into system 50A. System input device 280, for example, may be constructed as a push button device, such as a keyboard, touch screen, or the like, and/or may enable information regarding the items 80 to be input via a bar code reader, a radio frequency identification (RFID) reader, or the like. System input device 174 may be in communication with a warehouse management system (not shown) that monitors and controls material flow on board ship 52

The following details the procedure by which items 80 are stored into system 50A: Initially, a load platform 84 is discharged from load platform holder 218 to first conveyor end 74 and items 80 located on a pallet 82 are then placed on the load platform 84. Prior to or after placing a pallet 82 containing inventoried items 80 onto a dispensed load platform 84, an operator will input information regarding the items 80 to be stored into the system controller 174 via the system input device 280. The items 80 may include a radio frequency identification (RFID) tag or bar code used to detail the type and quantity of the items 80. If not, the operator may manually entire the information into system input device 280, such as by a keyboard. The operator then inducts the load 56 into system 50A by sending a signal to the system controller 174, which signal may be supplied from the system input device 280, or may be supplied by a wireless activator, or other such activation method. Alternatively, this step may be performed automatically. Load platform driver 246 then engages the load platform 84 to securely affix the pallet 82 thereto. The load 56 may then be weighed by the weight sensors 262 and checked for acceptable size by dimensional sensor system 260. If within the predetermined acceptable size and weight limits, the load 56 will be advanced by first conveyor end 74 and the take away transfer conveyors 264 in the manner described above, if the load 56 is oversize or over weight or not properly identified, it will not be advanced along transfer conveyor 72.

If acceptable, the load 56 is conveyed to second conveyor end 76 adjacent aisle 66, whereupon the load 56 is scheduled to be retrieved and stored by transfer machine 64. Although not shown, optic sensors at second conveyor end 76 may be used to alert transfer machine 64 to the presence of loads 56 requiring storage. The system controller 174 schedules and sorts loads 56 to be retrieved and stored to specific storage positions 62 utilizing software algorithms to efficiently store and retrieve loads 56. The loads 56 may be sorted via the algorithms determining the storage location based on factors that include its weight, such that system 50A may be properly balanced within the structure to which it is mounted, and/or by the type of items 80 being stored. The transfer machine 64 then receives the load 56 from second conveyor end 76 and, using transfer machine position sensors 170, aligns the transfer machine 64 with the predetermined storage position 62. Transfer machine 64 and the storage conveyor 90 of the specified storage position 62 then function to cooperatively insert the load 56 into the storage position 62 in the manner described above.

Items 80 may be retrieved form system 50A in like manner as discussed above. However, if a load 56 is desired to be removed that is positioned on a storage position 62 behind other loads 56 relative to aisle 66, transfer machine 64 under control of system controller 174 must initially sort or reorganize loads 56 within system 50A. The loads 56 positioned in front of the desired load 56 will be withdrawn and transported to other storage positions 62 having room to receive additional loads 56 with material handling control systems 175 functioning to maintain or record the exact locations of all loads 56 at and within the various storage positions 62.

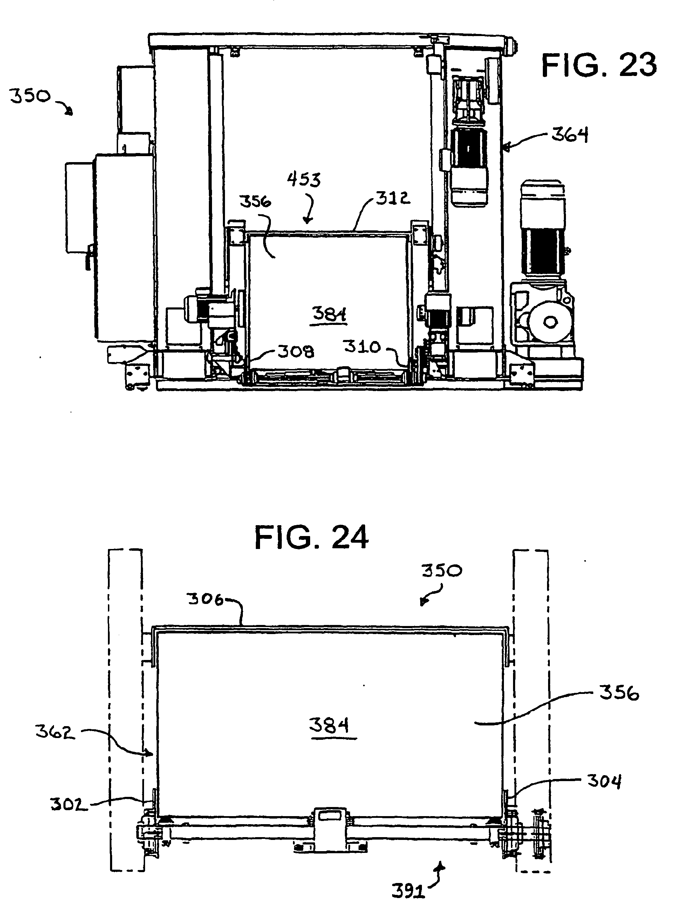

An alternative embodiment of an automated material handling system 350 is partially illustrated in FIGS. 23 and 24 that is adapted for the storage and retrieval of alternatively configured loads 356 constructed as six-sided rectangular load containers or cartons 384 and includes an alternative load storage retention system 391 and load handling retention system 453. As shown, system 350 includes a transfer machine 364 and storage position 362 that are of generally similar construction to transfer machine 64 and storage position 62 discussed above. However, storage position 362 includes an alternative storage retention system 391 that includes first, second, and third restraint members or restraint tracks 302, 304, 306, respectively, that extend along the length of storage position 362, with third restraint member 306 being positioned above and partially around load container 384. Similarly, transfer machine 364 includes an alternative load handling retention system 453 that also includes first, second, and third restraint members or restraint tracks 308, 310, 312, respectively. An automated material handling system (not shown) may be constructed to include both transfer machines 64, 364, and storage positions 62, 362 to simultaneously handle and store alternative loads 56,356. The illustrated restraint members 302, 304, and 308, 310, 312 thus define or form restraint surfaces adapted to restraint surfaces to constrain movement of loads 356.

Still further, instead of utilizing load platforms 84 to brace pallets 82 containing items 80, system 50A may be alternatively constructed to directly receive pallets containing items secured to the pallets, with the pallets having alternative configurations to the load platforms 84 disclosed. For example, the pallets may be constructed as standard storage pallets, or as tubs, or generally flat pallets of approximately uniform thickness.

Further, although storage shuttle 92, load handling shuttle 156, and transfer shuttles 234, 270 discussed above are disclosed as employing chains 116, 187, 242, 272, respectively, with grip members 130 formed as serrated links 132, alternative shuttles and grip members may also be employed. For example, shuttles may be constructed as belts, rollers, slats, or the like, and grip members may be constructed as ribs or plates that are sized and spaced to be positioned in front and back of each load on a storage position. Still further, shuttles and/or grip members may be constructed as gears or teeth adapted to be received by receptacles located on the load platforms, or a single chain for each shuttle may be employed.

Alternative embodiments of the load storage retention systems 91, 391 load handling retention systems 153, 453, and load transfer retention system 217 discussed above may also be employed within the scope of the present invention. For example, although the storage conveyor 90, load handling conveyor 154, and transfer conveyors 264 are disclosed as including two storage tracks 96, two load handling tracks 158, and two transfer tracks 266 that are constructed as generally C-shaped members, alternatively formed and numbers of storage, load handling, and transfer tracks may be used in connection with the present invention and still function as intended. For example, a single storage, load handling, and transfer track may be used at the various storage positions, transfer machines, and transfer conveyors, respectively, with the single tracks being centrally located and adapted to receive a projecting member extending from the load platform in, for example, a T-slot type arrangement, or the like.

Still further, load handling transport mechanism 86 and storage transport mechanism 88 may be constructed to employ alternative drive and driven devices relative to the disclosed friction drive and driven wheels 182, 100 within the scope of the present invention and also still function as intended. For example, drive and driven gears may be employed, or a driver adapted to engage a socket to cause rotation of a longitudinally rotating screw member may be employed.

Although FIG. 2 illustrates the inclusion of two transfer machines 64 and two load receiving assemblies 70 on system 50A, alternative numbers of transfer machines 64 and load receiving assemblies may be utilized. In addition, although transfer machine 64 is illustrated as including only one load handling device 150 adapted to carry a single load 84, alternatively constructed transfer machines having additional load handling devices or load handling devices adapted to carry multiple loads may alternatively be employed.

The automated storage and retrieval systems 50A and 50B of the present invention enables accurate and convenient storage of loads within an environment subject to external forces. The loads are substantially impeded from unwanted movement that may be caused by the external forces due to various retention systems on the storage positions, transfer machine, and load handling conveyor. The retention systems include various storage, load handling, and transfer tracks and shuttles having grip members that enable the loads to move in a constrained manner through the ASRS 50A and 50B. In addition, the transfer machines and storage positions are constructed for cooperatively exchanging loads for storage into or extraction from the storage positions utilizing a drive transport mechanism on the transfer machine that is adapted to selectively engage a driven transport mechanism located on any one of the storage positions, thus reducing the complexity of the system 50A and 50B,

The above is a description of the preferred embodiments. One skilled in the art will recognize that changes and modifications may be made without departing from the spirit of the disclosed invention, the scope of which is to be determined by the claims which follow.

## Claims

1. A transportation craft, comprising a material handling system (50) installed within the transportation craft (52) for selectively storing and retrieving inventoried loads (56), said material handling system comprising:
a controller (174); and
an automated storage and retrieval system (50A, 50B) installed within said craft, said automated storage and retrieval system comprising at least one rack (60A, 60B) and a transfer machine (64), said at least one rack defining a plurality of storage positions (62), and said transfer machine being adapted to convey loads for insertion or extraction from said storage positions;
wherein the material handling system further comprises a load handling conveyor (154) on said transfer machine (64), said load handling conveyor operable to transport loads for storage at or retrieval from each of said storage positions (62);
**characterised in that** the material handling system further comprises a storage conveyor (90) at each said storage position;
wherein said storage conveyor (90) and said load handling conveyor (154) are adapted to cooperatively insert or extract loads between said transfer machine (64) and said storage position (62);
wherein the storage conveyor comprises a load storage retention system (91);
wherein the load handling conveyor (154) of the transfer machine (64) comprises a load handling retention system (153); and
wherein the load retention systems (91, 153) are adapted to impede movement of loads in the storage position, other than when the loads are conveyed for storage or retrieval.

2. The craft of, claim 1, wherein said transfer machine (64) is operable in response to said controller (174) to transport loads (56) for storage at or retrieval from each of said storage positions (62), and wherein said storage conveyors (90) and said transfer machine (64) are adapted to cooperatively convey loads for insertion or extraction between said transfer machine and said storage positions in response to said controller.

3. The craft of claim 1 or claim 2, wherein said storage conveyor (90) is adapted to simultaneously move all loads contained within a corresponding one of said storage positions (62) in unison.

4. The craft of any preceding claim, wherein said storage conveyor (90) includes a storage shuttle (92), and wherein said transfer machine (64) and said storage conveyor are adapted to be selectively engaged to operate said storage shuttle and cooperatively insert or extract loads (56) between said transfer machine and said storage conveyor corresponding to the engaged said storage conveyor.

5. The craft of claim 4, wherein said storage shuttle (92) comprises at least one chain for conveying loads along said storage position (62).

6. The craft of claims 4. or 5, wherein one of said transfer machine (64) and said storage conveyor (90) include a drive transport mechanism (86) and the other of said transfer machine and said storage conveyor include a driven transport mechanism (88), and wherein said drive transport mechanism is adapted to selectively engage said driven transport mechanism to operate said storage shuttle (92).

7. The craft of claim 6, wherein said drive transport mechanism (86) and said driven transport mechanism (88) each include a friction wheels (100).

8. The craft of claims 6 or 7, wherein said drive transport mechanism (86) is mounted to an extension device, said extension device being operable in response to said controller to engage said drive transport mechanism (88) with said driven transport mechanism.

9. The craft of any one of claims 6 to 8, wherein said transfer machine (64) further includes a storage load sensor (206) operable to detect the position of a load within said storage position (62), and wherein said controller is operable in response to said storage load sensor to disengage said drive transport mechanism (86) from said driven transport mechanism (88).

10. The craft of any preceding claim, wherein said transfer machine (64) includes a transfer machine load.sensor (196) operable to regulate spacing between loads stored within each said storage position (62), said transfer machine load sensor adapted to detect the position of loads on said transfer machine, and wherein said controller is operable in response to said transfer machine load sensor to selectively control the cooperative conveying of loads between said storage conveyor (90) and said transfer machine.

11. A method of regulating spacing between loads (56) in a craft according to claim 10, using said transfer machine (64),
wherein prior to conveying a first load from said transfer machine to one of said storage positions (62) said transfer machine and said storage conveyor (90) cooperatively convey a second load from the corresponding said storage position partially onto said transfer machine in response to said controller,
wherein said transfer machine and said storage conveyor, in response to said controller, stop cooperatively conveying the second load onto said transfer machine in further response to said transfer machine load sensor (196) when the first and second loads are spaced a predetermined distance, and
wherein said transfer machine (64) and said storage conveyor (90) simultaneously convey the first and second loads into said storage position in response to said controller to thereby control spacing between loads (56).

12. The craft of any of claims 1 to 10, further comprising a load receiving assembly (70), said load receiving assembly adapted to enable loads to be received and delivered for delivery to and removal from said transfer machine (64).

13. The craft of claim 12, said load receiving assembly (70) including a transfer conveyor having first and second transfer conveyor ends (74, 76), wherein said first transfer conveyor end (74) is adapted to enable loads to be placed on or removed from said transfer conveyor (72) and said second transfer conveyor end (76) is adapted to enable loads to be moved between said transfer machine and said transfer conveyor.

14. The craft of claim 13, wherein said transfer conveyor (72) includes at least one load transfer retention system (217), said at least one load transfer retention system adapted to constrain movement of loads along said transfer conveyor whereby loads are impeded from moving other than when conveyed for storage or retrieval.

15. The craft of any one of claims 12 to 14, including load platforms (84), said load platforms adapted to hold inventoried items, and wherein said load receiving assembly (70) further comprises a load platform holder (218), said load platform holder adapted to dispense empty said load platforms upon which inventoried items are to be stacked for storage and adapted to collect empty said load platforms from which inventoried items are removed.

16. The craft of any of claims 1 to 10 or 12 to 15, further comprising an aisle (66) along which said transfer machine (64) is adapted to travel and a transfer machine position sensor, said controller being operable in response to said transfer machine position sensor to selectively align said transfer machine relative to said storage positions (62).

17. The craft of any of claims 1 to 10 or 12 to 16, wherein said storage positions (62) comprise passive storage positions, and wherein said transfer machine (64) is operable in response to said controller to be selectively aligned with any one of said storage positions, and wherein said transfer machine is operable in response to said controller to operate said storage conveyor (90) corresponding to said storage position whereby said transfer machine and said storage conveyor may cooperatively convey loads for insertion or extraction between said transfer machine and said storage position.

18. The craft of any of claims 1 to 10 or 12 to 17, wherein each said at least one load retention system comprises at least one track (320, 304, 306), and wherein said loads (356) are adapted for constrained movement along said at least one track.

19. The craft of any of claims 1 to 10 or 12 to 18, including load platforms (84), said load platforms adapted to hold inventoried items, and wherein said load platforms are adapted for constrained movement along said at least one load retention system.

20. The craft of claim 19, wherein each said at least one load retention system comprises first and second tracks, and wherein said load platforms are adapted for constrained sliding movement within said first and second tracks.

21. The craft of any of claims 1 to 10 or 12 to 20, wherein;
said at least one load retention system (91) further comprises a storage shuttle (92) included at said storage conveyor (90), said storage shuttle being adapted to convey loads along said storage position (62) and including grip members (130), and
said at least one load retention system further comprises a load handling shuttle (156) included on said transfer machine (64), said load handling shuttle being adapted to convey loads into and out of said transfer machine and including grip members ( 130);
wherein said grip members of said storage shuttle and said grip members of said load handling shuttle are adapted to engage loads such that independent movement of loads within said storage position (62) and said transfer machine (64) is impeded.

22. The craft of claim 21, wherein at least one chosen from said storage shuttle (92) and said load handling shuttle (156) comprise at least one chain.

23. The craft of claims 21 or 22, wherein at least one chosen from said grip members of said storage shuttle and said grip members of said load handling shuttle comprise serrated chain links (132).

24. The craft of any of claims 1 to 10 or 12 to 23, including load containers, said load containers adapted to hold inventoried items, and wherein said at least one load retention system is adapted to constrain movement of said load containers whereby said load containers are impeded from moving other than when said load containers are conveyed for storage or retrieval.

25. The craft of any of claims 1 to 10 or 12 to 24, wherein said at least one load retention system comprises at least one restraint member, said at least one restraint member having a restraint surface adapted to constrain movement of said storage containers along at least one chosen from said storage conveyor (90) and said load handling conveyor 154.

26. The craft of any of claims 1 to 10 or 12 to 25, wherein said transportation craft includes at least one aisle, wherein said transfer machine (64) is operable to travel substantially horizontally along said at least one aisle to transport loads for storage at or retrieval from each of said storage positions, and wherein said transfer machine (64) is adapted to generally horizontally convey loads for insertion or extraction from said storage positions.

## Patentansprüche

1. Transportfahrzeug, welches ein Materialhandhabungssystem (50) umfasst, das in dem Transportfahrzeug (52) installiert ist, um selektiv inventarisierte Ladeeinheiten (56) zu speichern bzw. abzurufen, wobei das Materialhandhabungssystem folgendes umfasst:
eine Steuerungsvorrichtung (174); und
ein System zur automatisierten Speicherung und zum automatisierten Abruf (50A, 50B), das in dem besagten Transportfahrzeug installiert ist, wobei das besagte System zur automatisierten Speicherung und zum automatisierten Abruf mindestens ein Regal (60A, 60B) und ein Umsetzgerät (64) umfasst, wobei das besagte mindestens eine Regal eine Vielzahl von Speicherplätzen (62) definiert und das besagte Umsetzgerät (64) dafür ausgelegt ist, Ladeeinheiten in die besagten Speicherplätze einzusetzen bzw. daraus zu entnehmen;
wobei das Materialhandhabungssystem ferner ein Lastaufnahmefördermittel (154) auf dem besagten Umsetzgerät (64) umfasst, wobei das besagte Lastaufnahmefördermittel dazu betreibbar ist, Ladeeinheiten zur Speicherung in oder zum Abruf aus den besagten Speicherplätzen (62) zu transportieren;
**dadurch gekennzeichnet, dass** das Materialhandhabungssystem ferner ein Lagerfördermittel (90) an jedem der besagten Speicherplätze umfasst;
wobei das besagte Lagerfördermittel (90) und das besagte Lastaufnahmefördermittel (154) dafür ausgelegt sind, zusammenwirkend Ladeeinheiten zwischen dem besagten Umsetzgerät (64) und den besagten Speicherplätzen (62) einzusetzen bzw. zu entnehmen;
wobei das Lagerfördermittel ein Rückhaltesystem für die gespeicherten Ladeeinheiten (91) umfasst;
wobei das Lastaufnahmefördermittel (154) des Umsetzgeräts (64) ein Rückhaltesystem für die transportierten Ladeeinheiten (153) umfasst; und
wobei die Ladeeinheiten-Rückhaltesysteme (91, 153) dafür ausgelegt sind, eine Bewegung der Ladeeinheiten in dem Speicherplatz zu unterbinden, außer wenn die Ladeeinheiten zur Speicherung oder zum Abruf befördert werden.

2. Transportfahrzeug gemäß Anspruch 1, wobei das besagte Umsetzgerät (64) dazu betreibbar ist, als Reaktion auf die besagte Steuerungsvorrichtung (174) Ladeeinheiten (56) zur Speicherung in oder zum Abruf aus jedem der besagten Speicherplätze (62) zu transportieren, und wobei die besagten Lagerfördermittel (90) und das besagte Umsetzgerät (64) dafür ausgelegt sind, zusammenwirkend als Reaktion auf die besagte Steuerungsvorrichtung Ladeeinheiten zum Einsetzen bzw. zum Entnehmen zwischen dem besagten Umsetzgerät und den besagten Speicherplätzen zu befördern.

3. Transportfahrzeug gemäß Anspruch 1 oder Anspruch 2, wobei das besagte Lagerfördermittel (90) dafür ausgelegt ist, gleichzeitig alle Ladeeinheiten, die in einem entsprechenden der besagten Speicherplätze (62) enthalten sind, gemeinsam zu bewegen.

4. Transportfahrzeug gemäß einem der vorstehenden Ansprüche, wobei das besagte Lagerfördermittel (90) ein Lagerkanalfahrzeug (92) beinhaltet und wobei das besagte Umsetzgerät (64) und das besagte Lagerfördermittel dafür ausgelegt sind, selektiv in Eingriff gebracht zu werden, um das besagte Lagerkanalfahrzeug zu betreiben und zusammenwirkend Ladeeinheiten (56) zwischen dem besagten Umsetzgerät und dem besagten Lagerfördermittel, das dem in Eingriff befindlichen besagten Lagerfördermittel entspricht, einzusetzen oder zu entnehmen.

5. Transportfahrzeug gemäß Anspruch 4, wobei das besagte Lagerkanalfahrzeug (92) mindestens eine Kette umfasst, um Ladeeinheiten entlang dem besagten Speicherplatz (62) zu befördern.

6. Transportfahrzeug gemäß Anspruch 4 oder 5, wobei entweder das besagte Umsetzgerät (64) oder das besagte Lagerfördermittel (90) einen antreibenden Transportmechanismus (86) und das jeweilige andere des besagten Umsetzgeräts und des besagten Lagerfördermittels einen angetriebenen Transportmechanismus (88) beinhaltet und wobei der besagte antreibende Transportmechanismus dafür ausgelegt ist, selektiv mit dem besagten angetriebenen Transportmechanismus in Eingriff zu gelangen, um das besagte Lagerkanalfahrzeug (92) anzutreiben.

7. Transportfahrzeug gemäß Anspruch 6, wobei der besagte antreibende Transportmechanismus (86) und der besagte angetriebene Transportmechanismus (88) jeweils ein Friktionsrad (100) beinhalten.

8. Transportfahrzeug gemäß Anspruch 6 oder 7, wobei der besagte antreibende Transportmechanismus (86) auf eine Verlängerungsvorrichtung montiert ist, wobei die besagte Verlängerungsvorrichtung dazu betreibbar ist, als Reaktion auf die besagte Steuerungsvorrichtung den besagten antreibenden Transportmechanismus (86) mit dem besagten angetriebenen Transportmechanismus (88) in Eingriff zu bringen.

9. Transportfahrzeug gemäß einem der Ansprüche 6 bis 8, wobei das besagte Umsetzgerät (64) ferner einen Lagerlastsensor (206) beinhaltet, der dazu betreibbar ist, die Position einer Ladeeinheit innerhalb des besagten Speicherplatzes (62) zu erkennen, und wobei die besagte Steuerungsvorrichtung dazu betreibbar ist, als Reaktion auf den besagten Lagerlastsensor den besagten antreibenden Transportmechanismus (86) aus dem besagten angetriebenen Transportmechanismus (88) auszurücken.

10. Transportfahrzeug gemäß einem der vorstehenden Ansprüche, wobei das besagte Umsetzgerät (64) einen Umsetzgerät-Lastsensor (196) beinhaltet, der dazu betreibbar ist, den Abstand zwischen Ladeeinheiten, die in jedem der besagten Speicherplätze (62) gespeichert sind, zu regeln, wobei der besagte Umsetzgerät-Lastsensor dafür ausgelegt ist, die Position von Ladeeinheiten auf dem besagten Umsetzgerät zu erkennen, und wobei die besagte Steuerungsvorrichtung dazu betreibbar ist, als Reaktion auf den besagten Umsetzgerät-Lastsensor selektiv die zusammenwirkende Beförderung von Ladeeinheiten zwischen dem besagten Lagerfördermittel (90) und dem besagten Umsetzgerät (64) zu steuern.

11. Verfahren zum Regeln der Abstände zwischen Ladeeinheiten (56) in einem Transportfahrzeug gemäß Anspruch 10, bei dem das besagte Umsetzgerät (64) verwendet wird,
wobei vor dem Befördern einer ersten Ladeeinheit von dem besagten Umsetzgerät in einen der besagten Speicherplätze (62) das besagte Umsetzgerät und das besagte Lagerfördermittel (90) zusammenwirkend eine zweite Ladeeinheit aus dem entsprechenden besagten Speicherplatz teilweise auf das besagte Umsetzgerät befördern als Reaktion auf die besagte Steuerungsvorrichtung,
wobei das besagte Umsetzgerät und das besagte Lagerfördermittel als Reaktion auf die besagte Steuerungsvorrichtung aufhören, zusammenwirkend die zweite Ladeeinheit auf das besagte Umsetzgerät zu befördern als weitere Reaktion auf den besagten Umsetzgerät-Lastsensor (196), wenn die erste und die zweite Ladeeinheit in einem vorab festgelegten Abstand zueinander angeordnet sind, und
wobei das besagte Umsetzgerät (64) und das besagte Lagerfördermittel (90) gleichzeitig die erste und die zweite Ladeeinheit in den besagten Speicherplatz befördern als Reaktion auf die besagte Steuerungsvorrichtung, um **dadurch** den Abstand zwischen den Ladeeinheiten (56) zu regeln.

12. Transportfahrzeug gemäß einem der Ansprüche 1 bis 10, welches ferner eine Lastaufnahmebaugruppe (70) umfasst, wobei die besagte Lastaufnahmebaugruppe derart ausgelegt ist, dass Ladeeinheiten für den Transport zu und zur Entnahme von dem besagten Umsetzgerät (64) aufgenommen und bereitgestellt werden können.

13. Transportfahrzeug gemäß Anspruch 12, wobei die besagte Lastaufnahmebaugruppe (70) ein Umsetzfördermittel beinhaltet, das ein erstes und ein zweites Umsetzfördermittelende (74, 76) aufweist, wobei das besagte erste Umsetzfördermittelende (74) derart ausgelegt ist, dass Ladeeinheiten auf dem besagten Umsetzfördermittel (72) platziert oder von diesem entnommen werden können, und wobei das besagte zweite Umsetzfördermittelende (76) derart ausgelegt ist, dass Ladeeinheiten zwischen dem besagten Umsetzgerät und dem besagten Umsetzfördermittel bewegt werden können.

14. Transportfahrzeug gemäß Anspruch 13, wobei das besagte Umsetzfördermittel (72) mindestens ein Rückhaltesystem für umgesetzte Ladeeinheiten (217) beinhaltet, wobei das besagte mindestens eine Rückhaltesystem für umgesetzte Ladeeinheiten dafür ausgelegt ist, eine Bewegung der Ladeeinheiten entlang dem besagten Umsetzfördermittel zu beschränken, wodurch Ladeeinheiten daran gehindert werden, sich zu bewegen, außer wenn sie zur Speicherung oder zum Abruf befördert werden.

15. Transportfahrzeug gemäß einem der Ansprüche 12 bis 14, das Lastplattformen (84) beinhaltet, wobei die besagten Lastplattformen dafür ausgelegt sind, inventarisierte Ladeeinheiten zu tragen, und wobei die besagte Lastaufnahmebaugruppe (70) ferner einen Lastplattformhalter (218) umfasst, wobei der besagte Lastplattformhalter dafür ausgelegt ist, leere besagte Lastplattformen bereitzustellen, auf die inventarisierte Ladeeinheiten zur Speicherung gestapelt werden sollen, und dafür ausgelegt ist, leere besagte Lastplattformen zu sammeln, von denen inventarisierte Ladeeinheiten entnommen wurden.

16. Transportfahrzeug gemäß einem der Ansprüche 1 bis 10 oder 12 bis 15, das ferner einen Gang (66), entlang dem das besagte Umsetzgerät (64) aufgrund seiner Konstruktion verfahren kann, sowie einen Umsetzgerät-Positionssensor umfasst, wobei die besagte Steuerungsvorrichtung dazu betreibbar ist, als Reaktion auf den besagten Umsetzgerät-Positionssensor selektiv das besagte Umsetzgerät bezogen auf die besagten Speicherplätze (62) auszurichten.

17. Transportfahrzeug gemäß einem der Ansprüche 1 bis 10 oder 12 bis 16, wobei die besagten Speicherplätze (62) passive Speicherplätze umfassen und wobei das besagte Umsetzgerät (64) als Reaktion auf die besagte Steuerungsvorrichtung derart betreibbar ist, dass es selektiv an einem beliebigen der besagten Speicherplätze ausgerichtet wird, und wobei das besagte Umsetzgerät als Reaktion auf die besagte Steuerungsvorrichtung dazu betreibbar ist, das besagte Lagerfördermittel (90) zu betreiben, das dem besagten Speicherplatz entspricht, wodurch das besagte Umsetzgerät und das besagte Lagerfördermittel zusammenwirkend Ladeeinheiten zum Einsetzen oder Entnehmen zwischen dem besagten Umsetzgerät und dem besagten Lagerplatz befördern können.

18. Transportfahrzeug gemäß einem der Ansprüche 1 bis 10 oder 12 bis 17, wobei jedes besagte mindestens eine Ladeeinheiten-Rückhaltesystem mindestens eine Schiene (320, 304, 306) umfasst und wobei die besagten Ladeeinheiten (356) für eine beschränkte Bewegung entlang der besagten mindestens einen Schiene ausgelegt sind.

19. Transportfahrzeug gemäß einem der Ansprüche 1 bis 10 oder 12 bis 18, das Lastplattformen (84) enthält, wobei die besagten Lastplattformen dafür ausgelegt sind, inventarisierte Ladeeinheiten zu tragen, und wobei die besagten Lastplattformen für eine beschränkte Bewegung entlang dem besagten mindestens einen Ladeeinheiten-Rückhaltesystem ausgelegt sind.

20. Transportfahrzeug gemäß Anspruch 19, wobei jedes besagte mindestens eine Ladeeinheiten-Rückhaltesystem eine erste und eine zweite Schiene beinhaltet und wobei die besagten Lastplattformen für eine beschränkte Gleitbewegung in der ersten und zweiten Schiene ausgelegt sind.

21. Transportfahrzeug gemäß einem der Ansprüche 1 bis 10 oder 12 bis 20, wobei:
das besagte mindestens eine Ladeeinheiten-Rückhaltesystem (91) ferner ein Lagerkanalfahrzeug (92) umfasst, das an dem besagten Lagerfördermittel (90) enthalten ist, wobei das besagte Lagerkanalfahrzeug dafür ausgelegt ist, Ladeeinheiten entlang dem besagten Speicherplatz (62) zu befördern, und Greifelemente (130) beinhaltet, und
das besagte mindestens eine Ladeeinheiten-Rückhaltesystem ferner ein Lastaufnahme-Kanalfahrzeug (156) umfasst, das auf dem besagten Umsetzgerät (64) enthalten ist, wobei das besagte Lastaufnahme-Kanalfahrzeug dafür ausgelegt ist, Ladeeinheiten auf das besagte Umsetzgerät bzw. von diesem herunter zu befördern, und Greifelemente (130) beinhaltet, und
wobei die besagten Greifelemente des besagten Lagerkanalfahrzeugs und die besagten Greifelemente des besagten Lastaufnahme-Kanalfahrzeugs dafür ausgelegt sind, mit Ladeeinheiten in Eingriff zu gelangen, sodass eine selbstständige Bewegung der Ladeeinheiten in dem besagten Speicherplatz (62) und dem besagten Umsetzgerät (64) unterbunden wird.

22. Transportfahrzeug gemäß Anspruch 21, wobei mindestens entweder das besagte Lagerkanalfahrzeug (92) und/oder das besagte Lastaufnahme-Kanalfahrzeug (156) mindestens eine Kette umfasst.

23. Transportfahrzeug gemäß Anspruch 21 oder 22, wobei mindestens entweder die besagten Greifelemente des besagten Lagerkanalfahrzeugs und/oder die besagten Greifelemente des besagten Lastaufnahme-Kanalfahrzeugs Zahnkettenglieder (132) umfassen.

24. Transportfahrzeug gemäß einem der Ansprüche 1 bis 10 oder 12 bis 23, das Ladeeinheiten-Behälter beinhaltet, wobei die besagten Ladeeinheiten-Behälter dafür ausgelegt sind, inventarisierte Ladeeinheiten zu enthalten, und wobei das besagte mindestens eine Ladeeinheiten-Rückhaltesystem dafür ausgelegt ist, eine Bewegung der besagten Ladeeinheiten-Behälter zu beschränken, wodurch eine Bewegung der besagten Ladeeinheiten-Behälter unterbunden wird, außer wenn die besagten Ladeeinheiten-Behälter zur Speicherung oder zum Abruf befördert werden.

25. Transportfahrzeug gemäß einem der Ansprüche 1 bis 10 oder 12 bis 24, wobei das besagte mindestens eine Ladeeinheiten-Rückhaltesystem mindestens ein Rückhalteelement umfasst, wobei das besagte mindestens eine Rückhalteelement eine Rückhaltefläche aufweist, die dafür ausgelegt ist, eine Bewegung der besagten Ladeeinheiten-Behälter entlang mindestens entweder dem besagten Lagerfördermittel (90) und/oder dem besagten Lastaufnahme-Fördermittel (154) zu beschränken.

26. Transportfahrzeug gemäß einem der Ansprüche 1 bis 10 oder 12 bis 25, wobei das besagte Transportfahrzeug mindestens einen Gang beinhaltet, wobei das besagte Umsetzgerät (64) dazu betreibbar ist, im Wesentlichen horizontal entlang dem mindestens einen Gang zu verfahren, um Ladeeinheiten zum Speichern in oder zum Abrufen aus jedem der besagten Speicherplätze zu transportieren, und wobei das besagte Umsetzgerät (64) dafür ausgelegt ist, Ladeeinheiten zum Einsetzen in die besagten Speicherplätze bzw. Entnehmen daraus im Wesentlichen horizontal zu befördern.

## Revendications

1. Embarcation de transport, comprenant un système de manutention de matériel (50) installé dans l'embarcation de transport (52) pour stocker et déstocker sélectivement des charges inventoriées (56), ledit système de manutention de matériel comprenant :
une commande (174), et
un système automatisé de stockage et déstockage (50A, 50B) installé dans ladite embarcation, ledit système automatisé de stockage et déstockage comprenant au moins un rayonnage (60A, 60B) et une machine de transfert (64), ledit au moins un rayonnage définissant une pluralité de positions de stockage (62) et ladite machine de transfert étant adaptée pour transporter des charges en vue de leur insertion ou de leur extraction sur lesdites positions de stockage,
étant entendu que le système de manutention de matériel comprend par ailleurs un convoyeur de manutention de charges (154) sur ladite machine de transfert (64), ledit convoyeur de manutention de charges étant utilisable pour transporter des charges en vue de leur stockage ou de leur déstockage sur chacune desdites positions de stockage (62),
**caractérisée en ce que** le système de manutention de matériel comprend par ailleurs un convoyeur de stockage (90) en chacune desdites positions de stockage ;
étant entendu que ledit convoyeur de stockage (90) et ledit convoyeur de manutention de charges (154) sont adaptés pour coopérer afin d'insérer ou d'extraire des charges entre ladite machine de transfert (64) et ladite position de stockage (62) ;
étant entendu que le convoyeur de stockage comprend un système de retenue de charges stockées (91) ;
étant entendu que le convoyeur de manutention de charges (154) de la machine de transfert (64) comprend un système de retenue de charges manutentionnées (153), et
étant entendu que les systèmes de retenue de charges (91, 153) sont adaptés pour empêcher le mouvement de charges dans la position de stockage, sauf lorsque les charges sont transportées pour être stockées ou déstockées.

2. Embarcation selon la revendication 1, dans laquelle ladite machine de transfert (64) est utilisable en réaction à ladite commande (174) pour transporter des charges (56) à stocker sur, ou à déstocker de, chacune desdites positions de stockage (62) et dans laquelle lesdits convoyeurs de stockage (90) et ladite machine de transfert (64) sont adaptés pour coopérer afin de transporter des charges à insérer ou à extraire entre ladite machine de transfert et lesdites positions de stockage en réaction à ladite commande.

3. Embarcation selon la revendication 1 ou la revendication 2, dans laquelle ledit convoyeur de stockage (90) est adapté pour déplacer simultanément, à l'unisson, toutes les charges contenues dans l'une desdites positions de stockage (62) qui y correspond.

4. Embarcation selon l'une quelconque des revendications précédentes, dans laquelle ledit convoyeur de stockage (90) comprend une navette de stockage (92) et dans laquelle ladite machine de transfert (64) et ledit convoyeur de stockage sont adaptés pour être accrochés sélectivement afin d'utiliser ladite navette de stockage et pour coopérer afin d'insérer ou d'extraire des charges (56) entre ladite machine de transfert et ledit convoyeur de stockage correspondant audit convoyeur de stockage accroché.

5. Embarcation selon la revendication 4 dans laquelle ladite navette de stockage (92) comprend au moins une chaîne pour transporter des charges le long de ladite position de stockage (62).

6. Embarcation selon les revendications 4 ou 5, dans laquelle l'un parmi ladite machine de transfert (64) et ledit convoyeur de stockage (90) comprend un mécanisme de transport menant (86) et l'autre parmi ladite machine de transfert et ledit convoyeur de stockage comprend un mécanisme de transport mené (88) et dans laquelle ledit mécanisme de transport menant est adapté pour accrocher sélectivement ledit mécanisme de transport mené pour utiliser ladite navette de stockage (92).

7. Embarcation selon la revendication 6, dans laquelle ledit mécanisme de transport menant (86) et ledit mécanisme de transport mené (88) comprennent chacun un galet de friction (100).

8. Embarcation selon les revendications 6 ou 7, dans laquelle ledit mécanisme de transport menant (86) est monté sur un dispositif extensible, ledit dispositif extensible étant utilisable en réaction à ladite commande pour accrocher ledit mécanisme de transport menant (88) audit mécanisme de transport mené.

9. Embarcation selon l'une quelconque des revendications 6 à 8, dans laquelle ladite machine de transfert (64) comprend par ailleurs un capteur de charges stockées (206) utilisable pour détecter la position d'une charge dans ladite position de stockage (62) et dans laquelle ladite commande est utilisable en réaction audit capteur de charges stockées pour décrocher ledit mécanisme de transport menant (86) dudit mécanisme de transport mené (88).

10. Embarcation selon l'une quelconque des revendications précédentes, dans laquelle ladite machine de transfert (64) comprend un capteur de charges sur machine de transfert (196) utilisable pour réguler l'écartement de charges stockées dans chacune desdites positions de stockage (62), ledit capteur de charges sur machine de transfert étant adapté pour détecter la position de charges sur ladite machine de transfert, et dans laquelle ladite commande est utilisable en réaction audit capteur de charges sur machine de transfert pour commander sélectivement le transport coopératif de charges entre ledit convoyeur de stockage (90) et ladite machine de transfert.

11. Procédé de régulation de l'écartement de charges (56) dans une embarcation selon la revendication 10, au moyen de ladite machine de transfert (64),
étant entendu que, avant de transporter une première charge de ladite machine de transfert à l'une desdites positions de stockage (62), ladite machine de transfert et ledit convoyeur de stockage (90) coopèrent afin de transporter une seconde charge de ladite position de stockage correspondante partiellement sur ladite machine de transfert en réaction à ladite commande,
étant entendu que ladite machine de transfert et ledit convoyeur de stockage, en réaction à ladite commande, cessent de coopérer au transport de la seconde charge sur ladite machine de transfert en réaction supplémentaire audit capteur de charges sur machine de transfert (196) lorsque les première et seconde charges sont écartées d'une distance prédéterminée, et
étant entendu que ladite machine de transfert (64) et ledit convoyeur de stockage (90) transportent simultanément les première et seconde charges dans ladite position de stockage en réaction à ladite commande pour réguler ainsi l'écartement des charges (56).

12. Embarcation selon l'une quelconque des revendications 1 à 10, comprenant par ailleurs un ensemble de réception de charges (70), ledit ensemble de réception de charges étant adapté pour permettre à des charges d'être reçues et distribuées en vue de leur distribution à, et de leur enlèvement de, ladite machine de transfert (64).

13. Embarcation selon la revendication 12, ledit ensemble de réception de charges (70) comprenant un convoyeur de transfert comportant une première et une seconde extrémité de convoyeur de transfert (74, 76), étant entendu que ladite première extrémité de convoyeur de transfert (74) est adaptée pour permettre à des charges d'être placées sur ledit, ou enlevées dudit, convoyeur de transfert (72) et que ladite seconde extrémité de convoyeur de transfert (76) est adaptée pour permettre à des charges d'être déplacées entre ladite machine de transfert et ledit convoyeur de transfert.

14. Embarcation selon la revendication 13, dans laquelle ledit convoyeur de transfert (72) comprend au moins un système de retenue de charges transférées (217), ledit au moins un système de retenue de charges transférées étant adapté pour entraver les mouvements de charges le long dudit convoyeur de transfert de telle sorte que les charges soient empêchées de se déplacer, sauf lorsqu'elles sont transportées pour être stockées ou déstockées.

15. Embarcation selon l'une quelconque des revendications 12 à 14, comprenant des plates-formes pour charges (84), lesdites plates-formes pour charges étant adaptées pour contenir des articles inventoriés et étant entendu que ledit ensemble de réception de charges (70) comprend par ailleurs un support de plate-forme pour charges (218), ledit support de plate-forme pour charges étant adapté pour distribuer lesdites plates-formes pour charges vides sur lesquelles des articles inventoriés doivent être gerbés pour être stockés, et adapté pour collecter lesdites plates-formes pour charges vides desquelles des articles inventoriés sont enlevés.

16. Embarcation selon l'une quelconque des revendications 1 à 10 ou 12 à 15, comprenant par ailleurs une travée (66) pour voyager le long de laquelle ladite machine de transfert (64) est adaptée, et un capteur de position de machine de transfert, ladite commande étant utilisable en réaction audit capteur de position de machine de transfert pour aligner sélectivement ladite machine de transfert relativement auxdites positions de stockage (62).

17. Embarcation selon l'une quelconque des revendications 1 à 10 ou 12 à 16, dans laquelle lesdites positions de stockage (62) comprennent des positions de stockage passif et dans laquelle ladite machine de transfert (64) est utilisable en réaction à ladite commande pour être alignée sélectivement sur l'une quelconque desdites positions de stockage et dans laquelle ladite machine de transfert est utilisable en réaction à ladite commande pour utiliser ledit convoyeur de stockage (90) correspondant à ladite position de stockage de telle sorte que ladite machine de transfert et ledit convoyeur de stockage puissent coopérer afin de transporter des charges à insérer ou à extraire entre ladite machine de transfert et ladite position de stockage.

18. Embarcation selon l'une quelconque des revendications 1 à 10 ou 12 à 17, dans laquelle chacun desdits au moins un système de retenue de charges comprend au moins une voie (320, 304,306) et dans laquelle lesdites charges (356) sont adaptées à un déplacement restreint le long de ladite au moins une voie.

19. Embarcation selon l'une quelconque des revendications 1 à 10 ou 12 à 18, comprenant des plates-formes pour charges (84), lesdites plates-formes pour charges étant adaptées pour contenir des articles inventoriés, et étant entendu que lesdites plates-formes pour charges sont adaptées à un déplacement restreint le long dudit au moins un système de retenue de charges.

20. Embarcation selon la revendication 19, dans laquelle chacun desdits au moins un système de retenue de charges comprend une première et une seconde voie et dans laquelle lesdites plates-formes pour charges sont adaptées à un déplacement coulissant restreint dans lesdites première et seconde voies.

21. Embarcation selon l'une quelconque des revendications 1 à 10 ou 12 à 20, dans laquelle :
ledit au moins un système de retenue de charges (91) comprend par ailleurs une navette de stockage (92) incluse au niveau dudit convoyeur de stockage (90), ladite navette de stockage étant adaptée pour transporter des charges le long de ladite position de stockage (62) et comprenant des organes de préhension (130), et
ledit au moins un système de retenue de charges comprend par ailleurs une navette de manutention de charges (156) incluse sur ladite machine de transfert (64), ladite navette de manutention de charges étant adaptée pour transporter des charges dans, et hors de, ladite machine de transfert et comprenant des organes de préhension (130),
étant entendu que lesdits organes de préhension de ladite navette de stockage et lesdits organes de préhension de ladite navette de manutention de charges sont adaptés pour saisir les charges de telle sorte qu'un mouvement indépendant de charges dans ladite position de stockage (62) et ladite machine de transfert (64) est empêché.

22. Embarcation selon la revendication 21, dans laquelle au moins un dispositif choisi parmi ladite navette de stockage (92) et ladite navette de manutention de charges (156) comprend au moins une chaîne.

23. Embarcation selon les revendications 21 ou 22, dans laquelle au moins un dispositif choisi parmi lesdits organes de préhension de ladite navette de stockage et lesdits organes de préhension de ladite navette de manutention de charges comprend des maillons de chaîne crantés (132).

24. Embarcation selon l'une quelconque des revendications 1 à 10 ou 12 à 23, comprenant des conteneurs de charges, lesdits conteneurs de charges étant adaptés pour contenir des articles inventoriés, et étant entendu que ledit au moins un système de retenue de charges est adapté pour entraver le déplacement desdits conteneurs de charges de telle sorte que lesdits conteneurs de charges soient empêchés de se déplacer, sauf lorsque lesdits conteneurs de charges sont transportés pour être stockés ou déstockés.

25. Embarcation selon l'une quelconque des revendications 1 à 10 ou 12 à 24, dans laquelle ledit au moins un système de retenue de charges comprend au moins un organe de retenue, ledit au moins un organe de retenue comportant une surface de retenue adaptée pour restreindre le déplacement desdits conteneurs de stockage le long d'au moins un dispositif choisi parmi ledit convoyeur de stockage (90) et ledit convoyeur de manutention de charges (154).

26. Embarcation selon l'une quelconque des revendications 1 à 10 ou 12 à 25, étant entendu que ladite embarcation de transport comprend au moins une travée, que ladite machine de transfert (64) est utilisable pour se déplacer sensiblement à l'horizontale le long de ladite au moins une travée pour transporter des charges à stocker sur, ou à déstocker de, chacune desdites positions de stockage, et que ladite machine de transfert (64) est adaptée pour transporter globalement à l'horizontale des charges à insérer ou à extraire desdites positions de stockage.
